(19) Europäisches Patentamt / European Patent Office / Office européen des brevets

(11) **EP 2 659 951 A1**

(12) **EUROPEAN PATENT APPLICATION**
published in accordance with Art. 153(4) EPC

(43) Date of publication:
06.11.2013 Bulletin 2013/45

(51) Int Cl.:
*B01D 63/02* (2006.01)          *B01D 63/00* (2006.01)
*B01J 20/28* (2006.01)          *B01J 20/30* (2006.01)

(21) Application number: 11852651.6

(22) Date of filing: 27.12.2011

(86) International application number:
PCT/JP2011/080343

(87) International publication number:
WO 2012/091070 (05.07.2012 Gazette 2012/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 27.12.2010 JP 2010290735

(71) Applicant: Asahi Kasei Chemicals Corporation
Tokyo 101-8101 (JP)

(72) Inventors:
• SHINOHARA Naoyuki
  Tokyo 101-8101 (JP)
• SATO Yuta
  Tokyo 101-8101 (JP)

(74) Representative: Strehl Schübel-Hopf & Partner
Maximilianstrasse 54
80538 München (DE)

(54) **ADSORPTION/SEPARATION MEMBRANE MODULE, METHOD FOR PRODUCING ADSORPTION/SEPARATION MEMBRANE MODULE, AND PARTITION MEMBER**

(57)     There is provided an adsorption/separation membrane module, a method for producing an adsorption/separation membrane module and a partition member, that can secure high scalability using hollow fiber membranes with an adsorption function.

The hollow fiber membrane module 1 has a hollow fiber membrane bundle 3 composed of a plurality of hollow fiber membranes 2 with an adsorption function, a housing 4 that houses the hollow fiber membrane bundle 3, and partition members 6A, 6B that partition the hollow fiber membrane bundle 3 into a plurality of small bundles 3A, 3B, 3C, 3D, at an end of the hollow fiber membrane bundle 3, the partition members 6A, 6B having penetrating sections 21, 22, 23, 24, 26 that penetrate in the lengthwise direction of the hollow fiber membranes 2. The volume fill factor of the hollow fiber membranes 2 is at least 30% and less than 70%. This can secure throughput capacity for the hollow fiber membrane module 1, while maintaining consistent adsorption capacity per unit membrane volume, thus ensuring high scalability.

Fig.1

**Description**

**Technical Field**

The present invention relates to an adsorption/separation membrane module and a method for producing it, and to a partition member to be used in an adsorption/separation membrane module.

**Background Art**

Conventional hollow fiber membrane modules that are known comprise a hollow fiber membrane bundle consisting of a plurality of hollow fiber membranes, a cylinder housing the hollow fiber membrane bundle, and a partition member that partitions the hollow fiber membrane bundle into a plurality of membrane bundles, at the ends of the hollow fiber membrane bundle (see PTLs 1 and 2, for example). In this type of hollow fiber membrane module, the partition member is constructed by combining plates into a cross shape, the hollow fiber membrane bundle being partitioned into 4 parts, for example, at the ends. Such a hollow fiber membrane module is used for concentration of valuable substances or impurity removal in various industrial fields such as food and beverage products, chemical products and drugs, and for various types of water treatment such as ultrapure water production, river water clarification and waste water treatment.

**Citation List**

**Patent Literature**

[PTL 1] Japanese Unexamined Patent Application Publication No. 2002-018244
[PTL 2] Japanese Unexamined Patent Application Publication No. 2000-185220

**Summary of Invention**

**Technical Problem**

When designing an actual process for purification or concentration using a hollow fiber membrane module, for various industrial fields or water treatments, the number of large-sized hollow fiber membrane modules necessary for the actual process is usually calculated based on a prior evaluation using small-sized hollow fiber membrane modules. For concise calculation of the number of hollow fiber membrane modules required, it is important to ensure adequate scalability of the hollow fiber membrane modules. Scalability is the correlation between the size of each hollow fiber membrane module (specifically, the length and inner and outer diameter of the hollow fiber membrane, and the total membrane volume determined by the number of hollow fiber membranes in the hollow fiber membrane bundle) and the throughput capacity (for example, the amount of water to be treated and adsorption of substances to be adsorbed per unit time), and preferably scaling the hollow fiber membrane module to a prescribed size factor accurately results in throughput capacity to that prescribed factor. High and stable scalability allows design to the desired performance with adequate precision in an actual process. However, when the scalability of a hollow fiber membrane module is low and/or there is variation in scalability for different hollow fiber membrane modules, the desired performance cannot be exhibited in the actual process and the potential for design errors in the actual process increases.

Incidentally, hollow fiber membranes are classified as either size separation membranes that have a "screening function", or adsorption membranes that have an "adsorption function".

A screening function is a function of performing separation into sizes corresponding to the pore sizes of a porous membrane. In a size separation membrane with such a function, separation occurs as the dissolved components and solvent components that are smaller than the pore size of the membrane pass through the membrane, while dissolved components that are larger than the pore size of the membrane are blocked by the membrane. Size separation membranes with screening functions include ultrafiltration membranes, microfiltration membranes, nanofiltration membranes, dialysis membranes and reverse osmosis membranes. Such size separation membranes are mainly used for purposes such as purification treatment, sewage treatment, food concentration and purification, ultrapure water purification and general industrial waste water treatment. For purification treatment and sewage treatment, in particular, research usually begins on the size of the actual process instead of exploratory installation on a small scale as described above.

With continuous use of such a size separation membrane the throughput will decrease due to clogging, but since the quality of the treatment solution is maintained by the screening function there is no reduction in treatment solution quality. Therefore, the throughput and usable life are important requirements for size separation membranes.

Adsorption function, on the other hand, is a function of separation based on differences in interactive forces on the pore surfaces of the membrane. With adsorption membranes having such function, components with affinity for the pore surfaces of the membrane due to interactive force with the pore surfaces accumulate on the porous surfaces of the porous membrane and become concentrated, while components without interaction with the pore surfaces of the membrane, or components that are repelled, pass through the porous membrane, being thus separated. Adsorption membranes with such an adsorption function include ion adsorption membranes, and hydrophobic interaction adsorption membranes or affinity adsorption membranes. Such adsorption membranes are used mainly for biotechnological purposes such as protein purification, antibody purification, DNA removal and virus removal, or for recovery of metal ions. When the solutions to be purified are costly, as is the case particularly with biotechnological uses, it is common to design the actual process based on experimental data on a small scale.

Continuous use of such adsorption membranes not only results in lower throughput due to clogging but also lowers the quality of the treatment solution, due to the effects of adsorption breakthrough, which is unique to adsorption membranes. Adsorption breakthrough is a phenomenon in which substances to be adsorbed that have not been fully adsorbed leak to the permeation side of the membrane. In order to avoid such leakage of substances to be adsorbed due to adsorption breakthrough, the scalability must be extremely high and stable for adsorption membranes, as opposed to size separation membranes.

Scalability is a particularly important issue for uses in which the amounts of impurities to be removed (or the amounts of active ingredients to be recovered) are precisely established, such as with purification of drugs. That is, for adsorption removal of impurities, for example, it is necessary to reliably prevent inclusion of impurities in the treatment solution that is to be used in preparation of a drug, which occurs as a result of a lower throughput capacity of the hollow fiber membrane module than projected. Consequently, the size of the hollow fiber membrane module to be applied is specifically determined by the amount of stock solution to be purified and the content of substances, and the throughput capacity for that size must be reliably exhibited. In other words, hollow fiber membrane modules must have high scalability.

The present inventors have conducted diligent research on the scalability of hollow fiber membrane modules using hollow fiber membranes with an adsorption function (hereunder also referred to simply as "adsorption/separation membrane modules"), and as a result, we have found that the scalability of a hollow fiber membrane module is affected by the volume fill factor, which is the volume occupied by the hollow fiber membrane bundles with respect to the volume of the cylinder of the hollow fiber membrane module, and that by limiting the volume fill factor of the hollow fiber membrane to within a prescribed range, it is possible to increase and stabilize the scalability of the hollow fiber membrane module. Incidentally, the prior art has not dealt with the relationship between volume fill factor and scalability for hollow fiber membrane modules using hollow fiber membranes, and the volume fill factor was ascertained to be extremely important through research on adsorption/separation membrane modules, which are required to have especially high scalability compared to size separation membranes.

It is an object of the present invention, which has been accomplished based on the aforementioned knowledge, to provide an adsorption/separation membrane module that guarantee high scalability using hollow fiber membranes with an adsorption function, as well as a method for producing the adsorption/separation membrane module, and a partition member. In particular, it is an object of the method for producing an adsorption/separation membrane module and the partition member, to allow production of an adsorption/separation membrane module with which a stable volume fill factor can be obtained.

**Solution to Problem**

The adsorption/separation membrane module of the invention is an adsorption/separation membrane module comprising a hollow fiber membrane bundle composed of a plurality of hollow fiber membranes with an adsorption function, a cylinder that houses the hollow fiber membrane bundle, and a potting layer that pots at least one end of the hollow fiber membrane bundle, wherein the potting layer has a potting agent dense section extending across the entire thickness of the potting layer, along the lengthwise direction of the hollow fiber membrane bundle. The potting agent dense section is a region of each element of the potting layer comprising a potting agent, a hollow fiber membrane and another member, where the potting agent is the main constituent component.

For production of an adsorption/separation membrane module, the potting layer is formed by filling the potting agent into the end of a unit comprising a hollow fiber membrane bundle and a cylinder, but if the space that is to serve as the potting agent dense section extending across the entire thickness of the potting layer along the lengthwise direction of the hollow fiber membrane bundle is secured in the potting layer, the space can function as a buffer space and/or fluid channel during filling of the potting agent (details to be provided below). This can reduce the load acting on the ends of the hollow fiber membrane bundle during filling of the potting agent, thereby helping to prevent buckling of the hollow fiber membrane bundle.

Even if the design is one such that the volume fill factor of the hollow fiber membrane bundle is optimal with respect to the cylinder, significant buckling of the hollow fiber membrane bundle by filling of the potting agent can increase the volume fill factor of the hollow fiber membrane bundle with respect to the cylinder, above the design value. An adsorption/separation membrane module varies in its adsorption depending on the volume fill factor (that is, the amount of target substance the adsorption/separation module can adsorb until adsorption breakthrough), and it is therefore necessary to avoid an excess volume fill factor.

The relationship between volume fill factor and adsorption/separation membrane module adsorption will now be explained. It will be assumed that fluid flows from the inner surface side of the hollow membrane, and treatment solution is obtained as permeation fluid from the outer surface side. The hollow fiber membrane has a pressure difference between the inner surface side and the outer surface side (hereunder referred to as "pressure difference between membranes"), whereby the fluid permeates. The amount of fluid permeating per unit time depends on the pressure difference between membranes. In an adsorption/separation membrane module in which a hollow fiber membrane bundle is housed in a cylinder, the space between the outer surface side of the hollow fiber membrane bundle and the inner surface side of the cylinder is reduced as the volume fill factor of the hollow fiber membrane is increased. Consequently, large pressure loss is created when the treatment solution on the outer surface side of the hollow fiber membrane moves along the lengthwise direction of the hollow fiber membrane, to the openings on the end faces of the cylinder (from which the treatment solution is discharged). In other words, increasing the volume fill factor causes the pressure distribution to vary along the lengthwise direction of the hollow fiber membrane only on the outer surface side of the hollow fiber membrane, without altering the pressure distribution on the inner surface side of the hollow fiber membrane, and therefore variation in the pressure difference between membranes increases. Since this causes the treatment solution, which should be supplied to separation treatment uniformly across the entire regions of all of the hollow fiber membranes in the module, to flow in local excess, it produces a timing difference for adsorption breakthrough for the different hollow fiber membranes. Because the adsorption/separation membranes must complete separation treatment before adsorption breakthrough begins, such a difference in timing for the start of adsorption breakthrough for each hollow fiber membrane terminates functioning of the adsorption/separation membrane module as a whole, even if hollow fiber membranes remain that are capable of adsorption and have not undergone breakthrough. A similar condition occurs when fluid permeates from the outer surface side to the inner surface side of the hollow fibers.

Thus, having the potting agent dense section of the potting layer function as a buffer space during potting agent filling and/or as a fluid channel will inhibit buckling of the hollow fiber membrane bundles, thereby minimizing significant deviation of the volume fill factor of the hollow fiber membrane bundles with respect to the cylinder, in excess of the design value, preventing reduction in adsorption of the adsorption/separation membrane module, maintaining high and stable scalability, and preventing reduction in function of the adsorption/separation membrane module during the actual process, i.e. preventing reduction in treatment solution quality.

The invention may also have a cross-sectional area of the potting agent dense section which is at least 3% and less than 60% of the cross-sectional area occupied by the hollow fiber membrane bundles. By thus specifying the cross-sectional area of the potting agent dense section to be at least 3% and less than 60% of the cross-sectional area occupied by the hollow fiber membrane bundle, it is possible to minimize buckling. The cross-sectional area occupied by the hollow fiber membrane bundles is the cross-sectional area occupied by a roughly circumscribed circle in the region where the hollow fiber membrane bundles are present at the edge of the potting layer of the hollow fiber membrane module.

The invention may also have the hollow fiber membrane bundles divided into a plurality of small bundles at the potting layer, with the small bundles disposed with space between them. The small bundles may be disposed only partly with spaces (partially in contact), or they may be disposed with complete separation between them. By disposing the hollow fiber membrane bundles so that they are divided into a plurality of small bundles, the spaces between the small bundles can be made to function as spaces to serve as the potting agent dense sections, or in other words, as buffer spaces and/or fluid channels for filling of the potting agent, when the potting agent is filled during production of the adsorption/separation membrane module. In particular, if the small bundles are disposed with complete separation between them, the spaces between the small bundles will function not only as buffer spaces but also as fluid channels. As will be explained in detail below, a fluid channel is a space that guides the potting agent into the wide spaces between the hollow fiber membrane bundle and the cylinder, thereby allowing the buffer space to be further expanded. As a result, the load acting on the ends of the hollow fiber membrane bundle during filling of the potting agent can be reliably reduced, and buckling of the hollow fiber membrane bundle can be inhibited.

The invention may further comprise a partition member that partitions the hollow fiber membrane bundle into a plurality of small bundles in the potting layer, having a penetrating section penetrating through the lengthwise direction of the hollow fiber membrane bundle. By thus having the hollow fiber membrane bundle partitioned into a plurality of small bundles by the partition member having a penetrating section that penetrates through the lengthwise direction, the penetrating sections of the partition member can be made to function as spaces to serve as potting agent dense sections, i.e. buffer spaces and/or fluid channels for filling of the potting agent, when the potting agent is filled during production of the adsorption/separation membrane module, forming potting agent dense sections extending across the entire thickness of the potting layer, along the lengthwise direction of the hollow fiber membrane bundles in the potting layer. This can reduce the load acting on the ends of the hollow fiber membrane caused by filling of the potting agent, thereby helping to prevent buckling of the hollow fiber membrane bundle. The partition member also divides the potting agent mass into small bundles. The potting agent forming the potting layer releases heat during curing, resulting in a larger curing heat value with greater potting agent mass, and thereby also increasing cooling shrinkage. Therefore, by dividing the potting agent mass it is possible to reduce the curing heat value per mass of potting agent, minimizing cooling shrinkage and preventing generation of peeling or cracking of the potting layer.

The invention may also have the penetrating sections of the partition member functioning as buffer spaces and/or fluid channels when the potting agent is filled, to form potting agent-occupied sections extending across the entire thickness of the potting layer, along the lengthwise direction of the hollow fiber membrane bundles in the potting layer (in other words, potting agent dense sections composed entirely of the potting agent). This can reliably reduce the load acting on the ends of the hollow fiber membrane bundle during filling of the potting agent, thereby helping to prevent buckling of the hollow fiber membrane bundle. In addition, since the potting agent filled into the penetrating sections is also divided by the partition member, it is possible to prevent generation of peeling and cracking in the potting layer.

The invention may also have a partition member which has the penetrating sections formed by a pair of plate members laid facing each other. The invention may also have the penetrating sections of the partition member functioning as buffer spaces and fluid channels when the potting agent is filled, to form potting agent dense sections extending across the entire thickness of the potting layer, along the lengthwise direction of the hollow fiber membrane bundles in the potting layer. By forming the partition member by a pair of plate members, the buffer spaces and fluid channels can be conveniently formed to reliable dimensions according to design. In addition, it is possible to prevent generation of peeling and cracking in the potting layer, by division of the potting agent mass with the partition member.

The invention may also be further provided with splitting means by which the hollow fiber membrane bundle partitioned by the partition member is split. Thus, the hollow fiber membrane bundle can be formed into small bundles by splitting of the hollow fiber membrane bundle with the splitting means.

The invention may also be further provided with a protecting member covering the outer periphery of the hollow fiber membrane bundle partitioned by the partition member. Such a protecting member can protect the outer periphery of the hollow fiber membrane bundle. It can also further secure the gaps between the hollow fiber membrane bundles, and/or prevent separation of the hollow fiber membranes in the hollow fiber membrane bundle, thereby further ensuring scalability.

The invention may also have the partition member as a pair of mutually opposing plate members combined into a cross shape. By thus forming the partition member into a simple cross shape, it is possible to more easily form the penetrating sections, resulting in a simple structure for the partition member and thus allowing commensurate increase in the number of hollow fiber membranes to be filled. In addition, the penetrating sections of the partition member may be made to function as buffer spaces and fluid channels when the potting agent is filled, to form potting agent dense sections extending across the entire thickness of the potting layer, along the lengthwise direction of the hollow fiber membrane bundles in the potting layer. Also, it is possible to prevent generation of peeling and cracking in the potting layer, by division of the potting agent with the partition member.

The invention may be used for separation and purification for biological purposes. This allows separation and purification for biological purposes to be accomplished with adequate precision to the desired capacity.

The method for producing an adsorption/separation membrane module according to the invention is a method for producing an adsorption/separation membrane module comprising a hollow fiber membrane bundle composed of a plurality of hollow fiber membranes with an adsorption function, a cylinder housing the hollow fiber membrane bundle, and a potting layer that pots at least the ends of the hollow fiber membrane bundle to the cylinder, wherein the potting agent is filled into the ends of a unit comprising the hollow fiber membrane bundle, the cylinder and a potting agent-injecting member that forms gaps between the hollow fiber membranes and extends along the lengthwise direction of the hollow fiber membrane bundle, to pot the hollow fiber membrane bundle to the cylinder, and the ends of the unit are cut to open the ends of the hollow fiber membrane. The potting agent-injecting member may be of a length that is removed together with the ends of the cut unit, or it may be of a length that remains in the potting layer of the adsorption/separation membrane module.

In the method for producing an adsorption/separation membrane module according to the invention, the potting agent-injecting member that forms gaps between the hollow fiber membranes extends in the lengthwise direction of the hollow fiber membrane bundle, and is thereby made to function as buffer spaces and/or fluid channels when the potting agent is filled, allowing formation of potting agent dense sections in the potting layer that extend across the entire thickness of the potting layer. The same function and effect are therefore exhibited as with the adsorption/separation membrane module described above. As a result, the method for producing an adsorption/separation membrane module according to the invention results in a stabilized volume fill factor, allowing production of an adsorption/separation membrane module with high, stable scalability.

The method for producing an adsorption/separation membrane module according to the invention is a method for producing an adsorption/separation membrane module comprising a hollow fiber membrane bundle composed of a plurality of hollow fiber membranes with an adsorption function, a cylinder housing the hollow fiber membrane bundle, a potting layer that pots at least the ends of the hollow fiber membrane bundle to the cylinder, and a partition member that partitions the hollow fiber membrane bundle into a plurality of small bundles in the potting layer and has a penetrating section that penetrates in the lengthwise direction of the hollow fiber membrane, wherein the potting agent is filled into the ends of a unit comprising the hollow fiber membrane bundle, the cylinder and the partition member, to pot the hollow fiber membrane bundle and partition member to the cylinder, and the ends of the unit are cut to open the ends of the hollow fiber membrane.

In the method for producing an adsorption/separation membrane module according to the invention, the partition member has a penetrating section that penetrates in the lengthwise direction of the hollow fiber membrane. The same function and effect are therefore exhibited as with the adsorption/separation membrane module described above. As a result, the method for producing an adsorption/separation membrane module according to the invention results in a stabilized volume fill factor, allowing production of an adsorption/separation membrane module with high, stable scalability.

The partition member of the invention is a partition member provided in an adsorption/separation membrane module comprising a hollow fiber membrane bundle composed of a plurality of hollow fiber membranes with an adsorption function, a cylinder that houses the hollow fiber membrane bundle, and a potting layer that pots at least one end of the hollow fiber membrane bundle to the cylinder, and partitions the hollow fiber membrane bundle into a plurality of membrane bundles at the ends of the hollow fiber membrane bundles, the partition member having a penetrating section that penetrates in the axial direction.

The partition member of the invention has a penetrating section that penetrates in the axial direction, i.e. in a direction along the lengthwise direction of the hollow fiber membrane, when fitted into an adsorption/separation membrane module. Therefore, an adsorption/separation membrane module employing a partition member according to the invention can exhibit the same function and effect as the adsorption/separation membrane module described above, and results in a stabilized volume fill factor, allowing production of an adsorption/separation membrane module with high, stable scalability.

The adsorption/separation membrane module of the invention is an adsorption/separation membrane module comprising a hollow fiber membrane bundle composed of a plurality of hollow fiber membranes with an adsorption function, a cylinder that houses the hollow fiber membrane bundle, and a potting layer that pots at least one end of the hollow fiber membrane bundle, the ratio of the kinetic adsorption capacity in the form of the module with respect to the kinetic adsorption capacity in the form of the single filaments of the hollow fiber membranes is between 90% and 100%.

The kinetic adsorption capacity referred to here is an index of the adsorption performance per unit membrane volume. It is determined by supplying an indicator substance to the adsorption/separation membrane module or to the adsorption membranes themselves, until adsorption breakthrough, and dividing the amount of adsorbed indicator substance by the total membrane volume of the adsorption membranes used in the evaluation. In other words, the kinetic adsorption capacity in the form of the module is the adsorption performance when the evaluation is conducted with a module, while the kinetic adsorption capacity in the form of the single filaments is the adsorption performance when the module is disassembled and the filled hollow fiber membranes are removed and evaluated.

With the adsorption/separation membrane module of the invention, a kinetic adsorption capacity in the form of the module can be obtained which is similar to the kinetic adsorption capacity in the form of the single filaments, for all sizes from small-sized to large-sized modules. As a result, it is possible to ensure high, stable scalability between adsorption/separation membrane modules of different sizes, to allow design of desired performance to sufficient precision in actual processes.

In addition, the adsorption/separation membrane module of the invention has a volume fill factor of at least 30% and less than 70%, which is the volume occupied by the hollow fiber membranes with  respect to the volume of the cylinder. This can secure throughput capacity for the installed area of the module while maintaining consistent adsorption performance per unit membrane volume, thus ensuring high, stable scalability. In addition, the ratio of the kinetic adsorption capacity in the form of the module with respect to the kinetic adsorption capacity in the form of the single filaments of the hollow fiber membranes may be between 90% and 100%.

**Advantageous Effects of Invention**

The adsorption/separation membrane module, method for producing an adsorption/separation membrane module and partition member of the invention can guarantee high and stable scalability using hollow fiber membranes with an adsorption function. In particular, the method for producing an adsorption/separation membrane module and the partition member allow production of an adsorption/separation membrane module with which a stable volume fill factor can be obtained.

EP 2 659 951 A1

## Brief Description of Drawings

Fig. 1 is a general schematic drawing showing the cross-sectional structure of a hollow fiber membrane module according to an embodiment of the invention, along the lengthwise direction.

Fig. 2 is a general schematic drawing showing the lateral cross-sectional structure of the potting layer of a hollow fiber membrane module according to an embodiment of the invention.

Fig. 3 is an exploded perspective view of a unit just prior to assembly for production of a hollow fiber membrane module according to an embodiment of the invention.

Fig. 4 is a flow chart for a method for producing a hollow fiber membrane module according to an embodiment of the invention.

Fig. 5 is a schematic diagram showing the lateral cross-sectional structure with a potting agent filled in the assembly unit of Fig. 3.

Fig. 6 is a schematic diagram showing a potting agent filled in the assembly unit of Fig. 3.

Fig. 7 is a schematic diagram showing a potting agent filled in the assembly unit of Fig. 3.

Fig. 8 is a schematic diagram showing both ends of the assembly unit of Fig. 3 in a cut state.

Fig. 9 is a graph showing the relationship between volume fill factor and module kinetic adsorption capacity.

Fig. 10 is a schematic diagram showing a state of buckling of a hollow fiber membrane bundle, where (a) shows the hollow fiber membrane bundle in a non-buckled state, and (b) shows the hollow fiber membrane bundle in a buckled state.

Fig. 11 is a pair of general schematic drawings showing the lateral cross-sectional structure of the potting layer of a hollow fiber membrane module according to a modified example.

Fig. 12 is a set of schematic diagrams showing a production process for the hollow fiber membrane module shown in Fig. 11(b).

Fig. 13 is a set of general schematic drawings showing the lateral cross-sectional structure of the potting layer of a hollow fiber membrane module according to a modified example.

Fig. 14 is a pair of general schematic drawings showing the lateral cross-sectional structure of the potting layer of a hollow fiber membrane module according to a modified example.

Fig. 15 is a pair of general schematic drawings showing the lateral cross-sectional structure of the potting layer of a hollow fiber membrane module according to a modified example.

Fig. 16 is a flow chart showing a scheme for ascertaining the border between the partition member and potting agent.

Fig. 17 is a graph showing the relationship between volume fill factor and adsorption capacity performance ratio, for examples and comparative examples.

## Description of Embodiments

Preferred embodiments of the invention will now be explained with reference to the accompanying drawings.

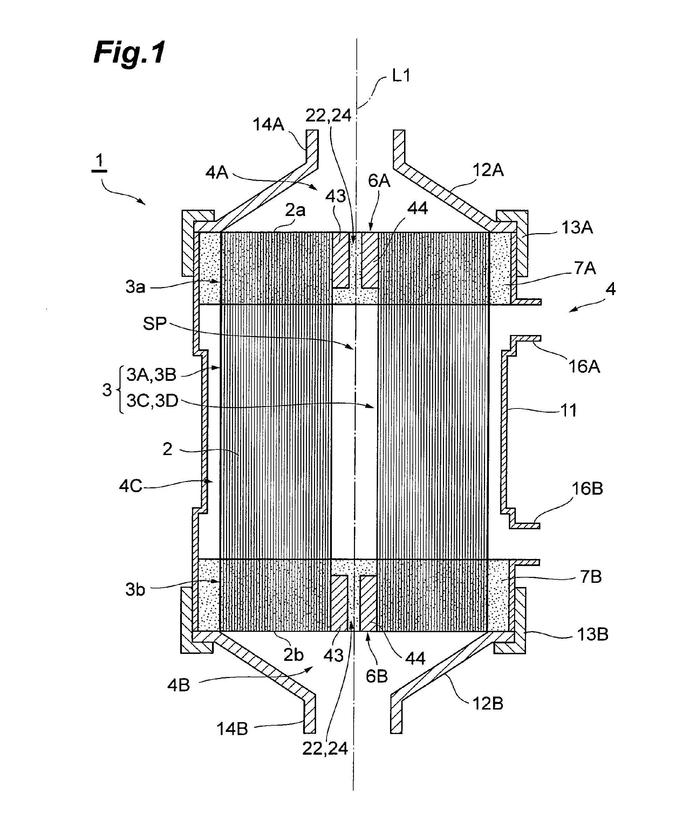

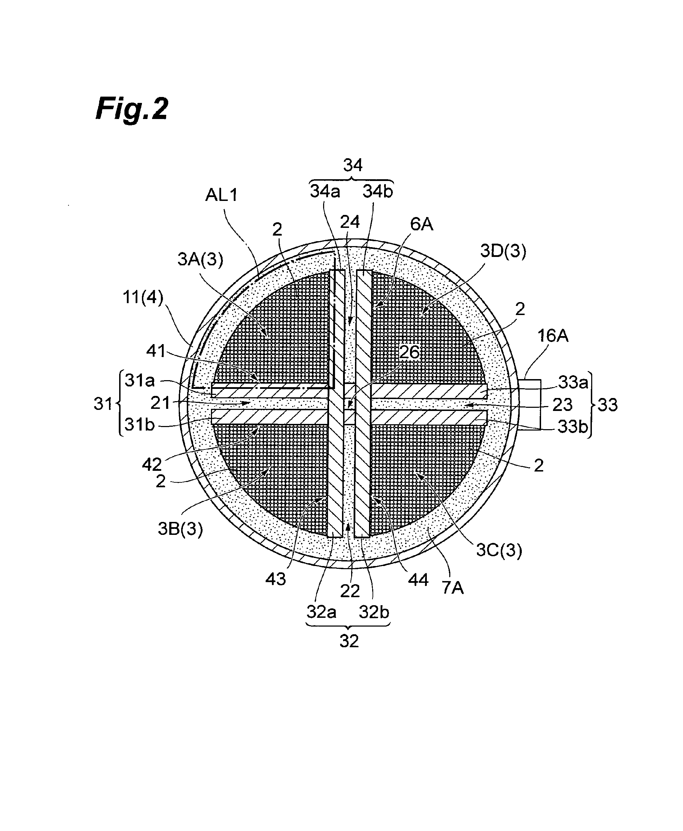

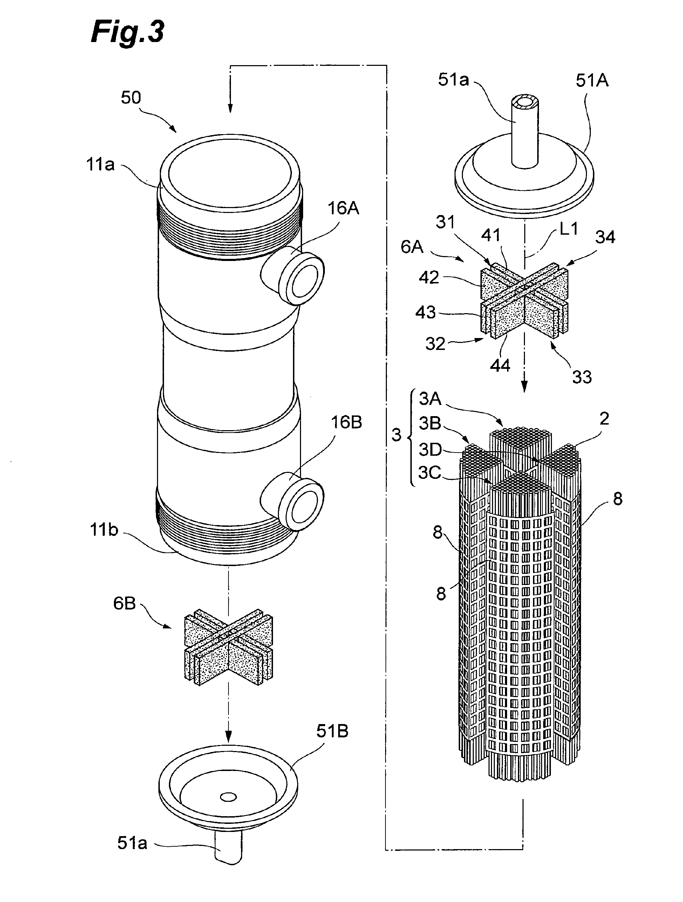

Fig. 1 is a general schematic drawing showing the cross-sectional structure of a hollow fiber membrane module 1 according to an embodiment of the invention, along the lengthwise direction. Fig. 2 is a general schematic drawing showing the lateral cross-sectional structure of the potting layer of a hollow fiber membrane module 1 according to an embodiment of the invention. Fig. 3 is an exploded perspective view of a unit just prior to assembly for production of a hollow fiber membrane module 1 according to an embodiment of the invention. As shown in Fig. 1 and Fig. 2, the hollow fiber membrane module 1 comprises a hollow fiber membrane bundle 3 composed of a plurality of hollow fiber membranes 2 having an adsorption function, a tubular housing (cylinder) 4 that houses the hollow fiber membrane bundle 3, partition members 6A, 6B situated at the ends 3a, 3b of the hollow fiber membrane bundle 3, and potting layers 7A, 7B potting the ends 3a, 3b of the hollow fiber membrane bundle 3 to the housing 4. The hollow fiber membrane module 1 is also referred to as an adsorption/separation membrane module.

The hollow fiber membrane bundle 3 is separated into a plurality of small bundles 3A, 3B, 3C, 3D by a partition member 6. When in a state potted to the housing 4, each of the small bundles 3A, 3B, 3C, 3D is disposed at a sufficient space so as not to be in mutual contact. For example, as shown in Fig. 3, each of the small bundles 3A, 3B, 3C, 3D may be covered with a protecting member 8 on the outer periphery. The protecting member 8 is a net-like structure with mesh openings. According to this embodiment, the protecting member 8 has a cross-sectional fan shape to cover the small bundles 3A, 3B, 3C, 3D formed by partitioning the hollow fiber membrane bundle 3 into four parts. The material of the protecting member 8 is not particularly restricted, and a known material may be used. For example, it may be selected from among polymer materials such as polyester, nylon, polyethylene, polypropylene, polyvinyl chloride, polyvinylidene chloride, polyvinyl fluoride, polyvinylidene fluoride, polysulfone and polycarbonate, metal materials such as stainless steel and aluminum, and inorganic materials such as glass fiber and carbon fiber. For drug and food and beverage

7

product purposes, in particular, it is preferably selected from among mats such as polyethylene, polypropylene, polysulfone, polycarbonate and polyethylene fluoride, from the viewpoint of elution safety and for the heat sterilization treatment resistance and chemicals cleaning resistance required for various uses. The shapes and dimensions of the mesh openings of the net with mesh openings in the protecting member 8 are also not particularly restricted, so long as they are shapes and dimensions that do not inhibit supply of fluid to the hollow fiber membranes. For example, it may be a lattice-like interleaved product, or an ejection molded product having rectangular or round openings.

The hollow fiber membranes 2 composing the hollow fiber membrane bundle 3 are adsorption membranes with a "adsorption function", and they have openings at the ends 2a, 2b on both sides.

The adsorption membrane type hollow fiber membranes 2 used may be any known types so long as they have adsorption function, without limitations on the materials or the microstructure of the adsorption action sites. There may also be used adsorption membrane type hollow fiber membranes that are obtained by applying one of the following known techniques (International Patent Publication No. WO2009/054226, US Patent No. 5547575, US Patent No. 6780327, Japanese Patent Public Inspection No. 2006-519273, Japanese Unexamined Patent Application Publication No. 2009-53191 and others), to hollow fiber membranes.

The adsorption membrane is composed of adsorption action sites that exhibit an adsorption function, and a base material membrane that retains the shape of a permeation film. The adsorption action sites that exhibit the adsorption function are formed by introducing functional groups with an adsorption function onto the porous surface of the base material. Examples of functional groups with an adsorption function include cation exchange groups such as sulfonate, carboxylate and phosphate groups, anion exchange groups such as primary amino groups and primary ammonium groups, secondary amino groups and secondary ammonium groups, tertiary amino group and tertiary ammonium groups and quaternary ammonium groups, hydrophobic groups such as alkyl groups and aromatic functional groups, chelate-type functional groups such as iminodiacetic acid groups or ethylenediaminetetraacetic acid groups, and affinity-type functional groups comprising protein A or biorelated substances. These functional groups may be used in combinations of multiple types.

The microstructure of the adsorption action sites is not particularly restricted so long as they have an adsorption function, and for example, it may involve direct chemical bonding to the surface of the hollow fiber membrane 2 serving as the base material, or physical potting to the porous body of the hollow fiber membrane 2 by coating. Alternatively, a linear microstructure may be formed, optionally with a crosslinked structure.

Known ultrafiltration membranes or microfiltration membranes may be used for the base material membranes composing the adsorption membranes. Examples of base material membrane materials include polymer materials such as polyvinylidene fluoride, polyethylene, polypropylene, polysulfone, polyethersulfone, polyphenylene oxide, polyacrylonitrile, cellulose and cellulose derivatives, polyvinyl alcohol and the like, as well as their compound materials, and inorganic materials such as alumina and zirconia. Incidentally, chemical treatment or physical treatment of the hollow fiber membranes 2 requires selection of a material that is not altered or decomposed under the processing conditions when the adsorption sites are subsequently processed. In addition, when a physical load is to be created such as a temperature load, chemical load, pressure and vibration during use, depending on the purpose of use, an appropriate material may be selected from among known materials, suitable for the purpose. More preferred materials to be used for the base material membranes are polyethylene, polypropylene, polyvinylidene fluoride and polysulfone.

The mean pore size of each hollow fiber membrane 2 may be selected as an appropriate size for the treatment solution. It is preferably between 0.001 $\mu$m and 10 $\mu$m, more preferably between 0.01 $\mu$m and 10 $\mu$m and even more preferably between 0.1 $\mu$m and 1 $\mu$m.

The porosity, which is the volume ratio occupied by pores in the hollow fiber membrane 2, may be selected as desired within a range that poses no problem for practical use. It is preferably between 5% and 99%, more preferably between 10% and 95% and even more preferably between 30 and 90%.

Measurement of the mean pore size and porosity may be accomplished by methods common to those skilled in the art, such as those described in Marcel Mulder, "Membrane Techniques" (IPC, Inc.). Specific examples of measuring methods include observation by electron microscope, the bubble point method, mercury porosimetry, transmittance methods, and the like.

As the cross-sectional dimensions of the hollow fiber membrane 2, it is preferred to use a membrane with an inner diameter of 50 $\mu$m to 10 mm and more preferably 100 $\mu$m to 4 mm, and an inner/outer diameter ratio in the range of 0.2 to 0.8.

For the form of the hollow fiber membrane 2, there may be used straight linear or crimped fibers.

The housing 4 comprises a tubular housing body 11, caps 12A, 12B situated at both ends of the housing body section 11, and fasteners 13A, 13B potting the caps 12A, 12B to the housing body 11. There are no particular restrictions on the materials of the housing body 11, the caps 12A, 12B and the fasteners 13A, 13B, and there may be used polymer materials such as polyvinyl chloride, polysulfone, polycarbonate or ABS, or metal materials such as stainless steel or aluminum. Both ends of the housing body 11 are sealed with respective potting layers 7A, 7B. The sections bonded to the potting layers 7A, 7B on the inner walls of both ends of the housing body 11 are furrowed or surface roughened to increase the adhesive force with the potting agent. The potting layers 7A, 7B compartmentalize the housing 4 into three spaces. Specifically, the housing 4 has a space 4A formed by the potting layer 7A and the cap 12A, a space 4B formed by the potting layer 7B and the cap 12B, and a space 4C formed by the housing body 11 and the potting layers 7A, 7B. The ends 2a of the hollow fiber membranes 2 open into the spaces 4A, and the ends 2b of the hollow fiber membranes 2 open into the space 4B. Also, a duct section 14A formed in the cap 12A communicates with the space 4A, and a duct section 14B formed in the cap 12B communicates with the space 4B. Duct sections 16A, 16B formed in the housing body 11 communicate with the space 4C.

The partition members 6A, 6B partition the hollow fiber membrane bundle 3 into plurality of small bundles 3A, 3B, 3C, 3D at the ends 3a, 3b of the hollow fiber membrane bundle 3. The partition members 6A, 6B have prescribed cross-sectional shapes and extend along the axis line L1. The axis line L1 of the partition members 6A, 6B is situated to match the axis line of the housing 4. The axial direction of the partition members 6A, 6B (that is, the direction in which the axis line L1 extends) is roughly parallel to the lengthwise direction of the hollow fiber membranes 2, and is perpendicular to the direction in which the small bundles 3A, 3B, 3C, 3D are partitioned. The partition members 6A, 6B have penetrating sections 21, 22, 23, 24, 26 that penetrate in the lengthwise direction (i.e. the axial direction) of the hollow fiber membranes 2. As shown in Fig. 2 and Fig. 3, the partition members 6A, 6B form a cross with four wall sections 31, 32, 33, 34. The wall section 31 partitions the small bundle 3A and the small bundle 3B. The wall section 32 partitions the small bundle 3B and the small bundle 3C. The wall section 33 partitions the small bundle 3C and the small bundle 3D. The wall section 34 partitions the small bundle 3D and the small bundle 3A. The penetrating section 21 is formed in the wall section 31. The penetrating section 22 is formed in the wall section 32. The penetrating section 23 is formed in the wall section 33. The penetrating section 24 is formed in the wall section 34. The penetrating section 26 is formed at the center location of the partition members 6A, 6B (the location where the axis line L1 lies), corresponding to the base sections of each of the wall sections 31-34. There are no particular restrictions on the material of the partition members 6A, 6B, and any known polymer material, inorganic material or metal material may be suitably employed. It is preferred to select the same material as, for example, the potting agent, hollow fiber membrane or housing body composing the hollow fiber membrane module. For example, there may be employed a polymer material such as epoxy resin, urethane resin, silicone resin, polyvinylidene fluoride, polyethylene, polypropylene, polysulfone, polyethersulfone, polyphenylene oxide, polyvinyl chloride, polycarbonate or ABS resin, an inorganic material such as alumina or zirconia, or a metal material such as stainless steel or aluminum. From the viewpoint of satisfactory adhesion with the potting agent and avoiding problems such as peeling from the potting agent, it is preferred to use the same material as the potting agent. The surface of the partition member may also be surface roughened to increase adhesive force with the potting agent.

Specifically, the wall section 31 is composed of a pair of plate members 31a, 31b facing each other. The penetrating section 21 is formed between the plate member 31a and the plate member 31b. The penetrating section 21 passes through the lengthwise direction of the hollow fiber membranes 2, and opens in the outer periphery direction (toward the ends of the plate members 31a, 31b). The wall section 32 is composed of a pair of plate members 32a, 32b facing each other. The penetrating section 22 is formed between the plate member 32a and the plate member 32b. The penetrating section 22 passes through the lengthwise direction of the hollow fiber membranes 2, and opens in the outer periphery direction (toward the ends of the plate members 32a, 32b). The wall section 33 is composed of a pair of plate members 33a, 33b facing each other. The penetrating section 23 is formed between the plate member 33a and the plate member 33b. The penetrating section 23 passes through the lengthwise direction of the hollow fiber membranes 2, and opens in the outer periphery direction (toward the ends of the plate members 33a, 33b). The wall section 34 is composed of a pair of plate members 34a, 34b facing each other. The penetrating section 24 is formed between the plate member 34a and the plate member 34b. The penetrating section 24 passes through the lengthwise direction of the hollow fiber membranes 2, and opens in the outer periphery direction (toward the ends of the plate members 34a, 34b). The penetrating section 26 is formed at the joint between the plate members, and it passes through the lengthwise direction of the hollow fiber membranes 2. The wall sections 31, 32, 33, 34 each have a thickness that sufficiently ensures clearance between the small bundles 3A, 3B, 3C, 3D. Thus, sufficient gaps SP are formed between the small bundles 3A, 3B, 3C, 3D, in the space 4C of the housing 4.

The partition members 6A, 6B shown in Fig. 2 and Fig. 3 are constructed by bonding mutually parallel flat plates 41, 42 and mutually parallel flat plates 43, 44 formed perpendicular to the flat plates 41, 42, at the center location. The flat plate 41 constitutes the plate member 31a and the plate member 33a. The flat plate 42 constitutes the plate member 31b and the plate member 33b. The flat plate 43 constitutes the plate member 32a and the plate member 34a. The flat plate 44 constitutes the plate member 32b and the plate member 34b. The partition members 6A, 6B can be constructed, for example, by forming a slit at the center location of the flat plates 41, 42, forming a slit at the center location of the flat plates 43, 44, and connecting the slits. Alternatively, the partition members 6A, 6B may be constructed by cutting into such a shape, or the partition members 6A, 6B may be constructed by molding into such a shape.

The potting layer 7A seals one of the ends of the housing body 11 of the housing 4. The potting layer 7A is formed so as to enclose one of the ends 3a of the hollow fiber membrane bundle 3, and the partition member 6A. The potting layer 7B seals the other end of the housing body 11 of the housing 4. The potting layer 7B is formed so as to enclose the other end 3b of the hollow fiber membrane bundle 3, and the partition member 6B. There are no particular restrictions on the material for the potting layers 7A, 7B, but usually a two-component mixed curable resin or thermoplastic resin is used. The two-component mixed curable resin is a resin that cures by mixing reactive compounds, and is also commonly referred to as a two-component adhesive) or two-component resin, the two components, known as the base compound and curing agent, being mixed at the time of use and cured. For example, there may be suitably used a urethane resin comprising a base compound containing an isocyanate reactive group, and a curing agent containing an active hydrogen-containing organic compound, an epoxy resin comprising a base compound containing an epoxy reactive group, and a curing agent containing an active hydrogen-containing organic compound or an organic acid anhydride, and or a silicone resin comprising a vinyl group-containing polysiloxane and a hydrosilyl group-containing polysiloxane. Preferred as thermoplastic resins are resins that have a lower melting point than the melting point polymer composing the hollow fiber membrane, and that are physically and chemically stable with respect to the raw water that is to be filtered. Specifically, there may be mentioned, thermoplastic resins such as polyurethane, polyester, polyethylene and polypropylene, and waxes. The potting layers 7A, 7B are composed of at least one type of these materials. The potting agent of the potting layers 7A, 7B also fills the penetrating sections 21, 22, 23, 24, 26 of the partition members 6A, 6B, forming potting agent dense sections.

The potting agent dense sections are regions of the potting layer where the density of the hollow fiber membranes is no greater than 1/3 with respect to the average density of the hollow fiber membranes, in the potting layer comprising the potting agent, hollow fiber membranes and partition member. This is preferably no greater than 1/5 and more preferably no greater than 1/10, from the viewpoint of the potting agent dense sections functioning as buffer spaces during filling of the potting agent in the module production steps, and inhibiting buckling of the hollow fiber membrane bundle. The average density of the hollow fiber membrane bundle and the density of the potting agent can be confirmed by a cross-section of the module potting layer. The average density of the hollow fiber membrane bundle referred to here is the sum of the cross-sectional area occupied by each hollow fiber membrane bundle (for example, small bundles) with respect to the cross-sectional area occupied by fiber bundles, described in detail below.

The average length of the partition members 6A, 6B with respect to the average thickness of the potting layers 7A, 7B is preferably at least 50%, more preferably at least 65% and even more preferably at least 80%, from the viewpoint of preventing generation of peeling and cracking of the potting layer by division of the potting agent mass. The partition members may protrude out from the boundaries of the potting layers 7A, 7B, but they are preferably completely enclosed in the potting layers. The average thickness of the potting layers 7A, 7B and the average length of the partition members 6A, 6B together indicate the dimensions of the housing 4 in the axial direction.

In the hollow fiber membrane module 1 constructed as described above, the fluid to be treated flows in from the duct section 14B into the housing 4 and through the hollow sections of the hollow fiber membranes 2, and when passing in the hollow fiber membranes 2 it is separated into passing components and non-passing components, the passing components being ejected from the duct section 16A and/or 16B, through the space 4C. The non-passing components may be discharged from the duct section 14A and recirculated to the duct section 14B. The circulation direction for the fluid to be treated may also be reversed. Alternatively, the fluid to be treated may flow in from the duct section 16A into the housing 4, and through the space 4C, passing into the hollow fiber membranes 2, at which time it is separated into passing components and non-passing components, the passing components passing through the hollow sections of the hollow fiber membranes 2 and being ejected from the duct section 14A and/or 14B. A portion of the non-passing components may be ejected from the duct section 16B and recirculated into the duct section 16A. The circulation direction for the fluid to be treated may also be reversed.

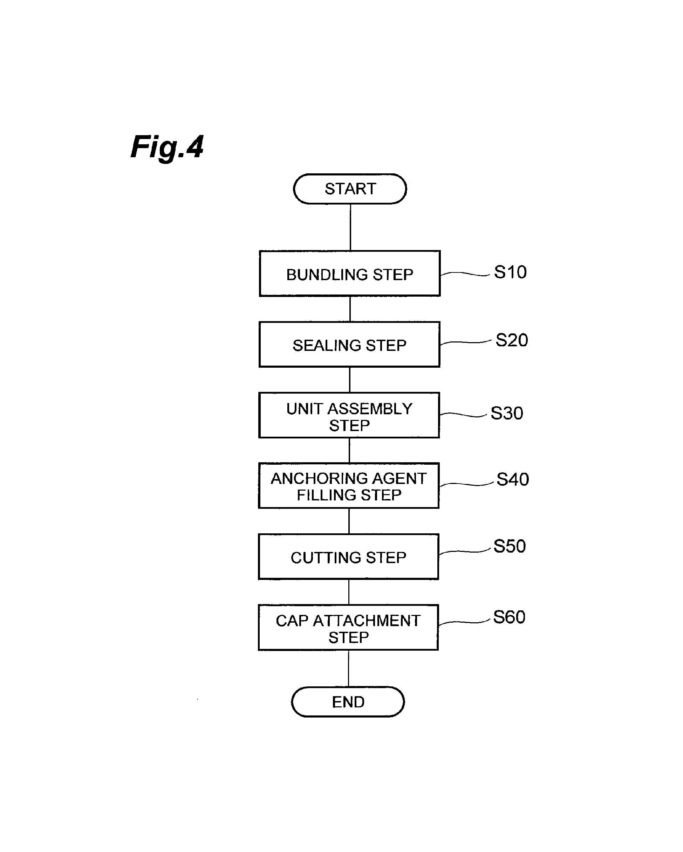

A method for producing the hollow fiber membrane module 1 of this embodiment will now be explained with reference to Fig. 3 to Fig. 8. As shown in Fig. 4, the method for producing the hollow fiber membrane module 1 begins with a step of bundling the hollow fiber membranes 2 (step S10). In step S10, a plurality of hollow fiber membranes 2 are bundled, forming a hollow fiber membrane bundle 3. At this time, as shown in Fig. 3, it is divided into four small bundles 3A, 3B, 3C, 3D, and a protecting member 8 may be used to cover each membrane bundle.

This is followed by a step of sealing each hollow fiber membrane 2 composing the hollow fiber membrane bundle 3 (step S20). In step S20, a seal material is used to fill in the ends of each hollow fiber membrane 2. The seal material used may be gypsum, for example. The order of the bundling step S10 and sealing step S20 may be reversed.

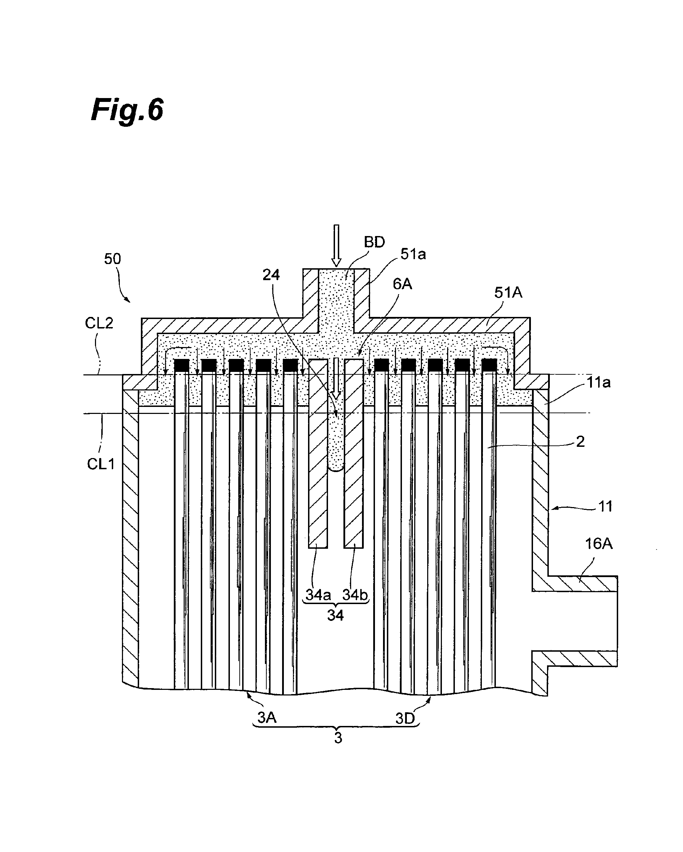

Next, the unit 50 is assembled before sealing with the potting agent (step S30). In step S30, as shown in Fig. 3 and Fig. 6, there is assembled the unit 50 with the hollow fiber membrane bundle 3 and partition members 6A, 6B incorporated into the housing body 11. In the form of the unit 50, the housing body 11 has, on both ends, trimmed sections 11a, 11b that are cut after filling the potting agent. The unit 50 is provided with caps 51A, 51B covering both ends of the housing body 11. The caps 51 A, 51 B each have a duct section 51a for inflow of potting agent into the housing body 11. When fitting the hollow fiber membrane bundles 3 and partition members 6A, 6B into the housing body 11, the hollow fiber membrane bundle 3 is fitted first, being already split into four small bundles 3A, 3B, 3C, 3D, and then the partition members 6A, 6B are fitted. Alternatively, after fitting a single hollow fiber membrane bundle 3 into the housing body 11, the partition members 6A, 6B may be fitted, to separate the hollow fiber membrane bundle 3 into small bundles 3A, 3B, 3C, 3D.

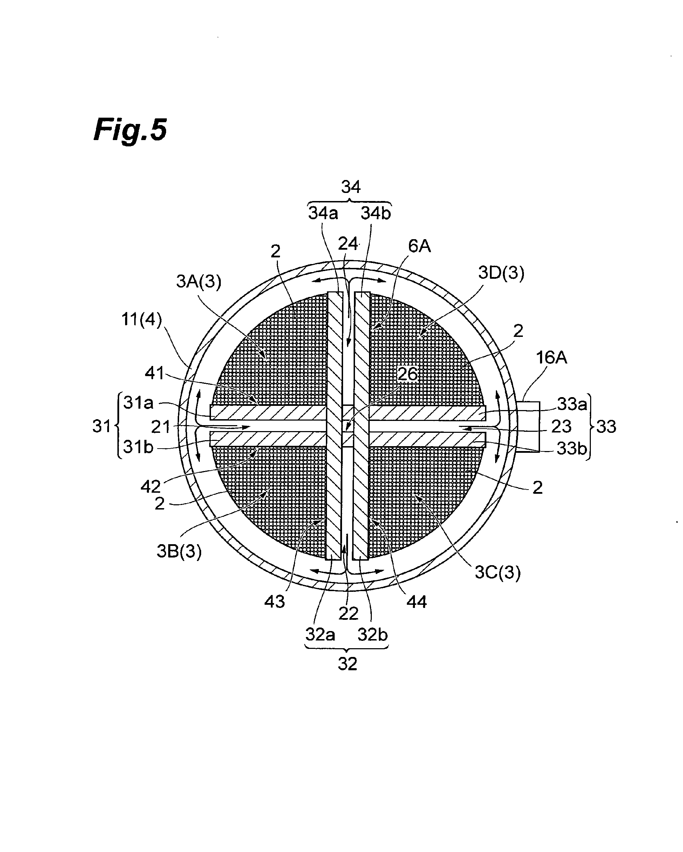

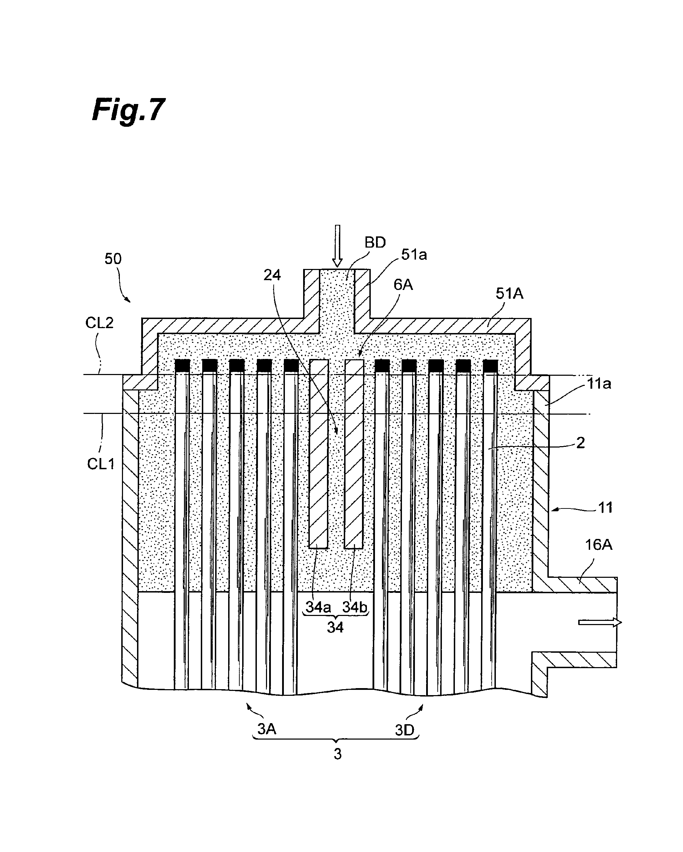

Next, both ends of the unit 50 are filled with a potting agent (the potting agent being finally cured to form the potting layer) (step S40). In step S40, as shown in Figs. 5 to 7, potting agent BD is filled in the housing body 11 of the unit 50 through the duct sections 51a of the caps 51A, 51B. Fig. 5 shows a cross-section along line CL1 of Fig. 6 and Fig. 7. Fig. 6 and Fig. 7 show only part of the wall section 34 of the small bundles 3A, 3D and partition member 6A, but the flow of the potting agent BD is the same as for the other small bundles 3B, 3C and other wall sections 31, 32, 33, and is the same at the partition member 6B end as well. Fig. 5 to Fig. 7 are schematic diagrams showing flow of the potting agent BD, with no limitation on the dimensions of the hollow fiber membranes 2, cap 51 A, housing body 11 or partition member 6A. The potting agent BD filled through the duct section 51a flows in between the wall face of the housing body 11 and the hollow fiber membrane bundle 3, between the hollow fiber membrane bundle 3 and the partition members 6A, 6B, and between the adjacent hollow fiber membranes 2 of the hollow fiber membrane bundle 3. Here the potting agent BD also flows into the penetrating  sections 21, 22, 23, 24, 26 of the partition members 6A, 6B. The filled potting agent BD forms layers that are to serve as the potting layers 7A, 7B after curing, at the ends of the housing body 11.

Filling of the potting agent BD may be accomplished by centrifugal casting, utilizing centrifugal force. The unit 50 is mounted on the centrifugation cassette while laid horizontally, and is rotated on the horizontal plane around the vertical axis as the rotation axis. The unit 50 is placed so that the ends that are to be bonded are on the outer side in the direction of centrifugation. The uncured potting agent BD, which is in a fluid state due to the centrifugal force of rotation of the centrifugation cassette, is extruded from the tank and flows into the housing body 11 through the duct section 51a. After the potting layer 7A has been formed on one end of the housing body 11, a potting layer 7B is formed on the other end by the same method. The center of rotation may be set to be the center location of the unit 50, and the potting agent BD simultaneously filled into both ends of the unit 50. Also, the potting agent BD may be statically filled and cured, as a method of "static bonding". When the potting agent BD has been completely filled, the potting agent BD layer is allowed to stand for curing to form the potting layers 7A, 7B.

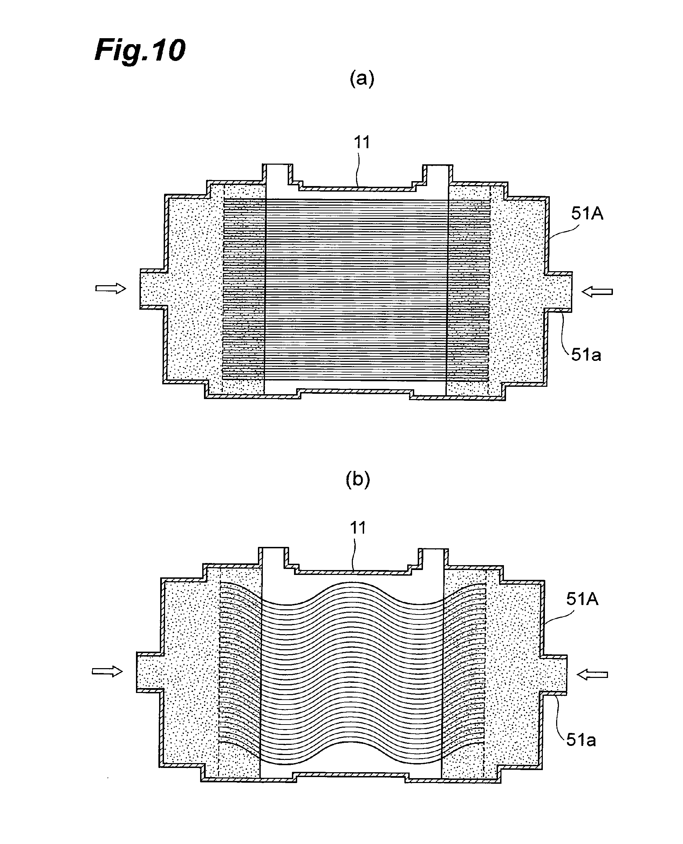

In a conventional hollow fiber membrane module, incidentally, potting agent BD injected through the duct section 51a fills in the gaps at the edges between the hollow fiber membranes 2 in the cap 51A, and between the edges and cap 51A of the hollow fiber membrane bundle 3. However, because these gaps are narrow and highly resistant to inflow of the potting agent BD, a long time is necessary for complete filling. As a result, the injection rate through the duct section 51a and the injection rate into the narrow spaces are not balanced (the injection rate through the duct section 51a being faster), and for a conventional hollow fiber membrane module, as shown in Fig. 10(b), the hollow fiber membrane bundle 3 is pushed in by the injection pressure of the potting agent BD, causing the hollow fiber membrane bundle 3 to buckle.

In contrast, when using a partition member with penetrating sections that penetrate in the lengthwise direction of the hollow fiber membrane bundle 3, as with this embodiment, as shown in Fig. 5 and Fig. 6, the penetrating sections 21, 22, 23, 24, 26 of the partition member 6A temporarily allow escape of the injection pressure of the injected potting agent BD, and can act as a "buffer space" (first buffer space). In addition, when using a partition member having a pair of plate members laid facing each other, as with this embodiment, the penetrating sections 21, 22, 23, 24 can also function as fluid channels connecting the wide spaces between the inner walls of the housing body 11 and the outer periphery of the hollow fiber membrane bundle 3 (second buffer spaces). That is, the penetrating sections of the partition member 6A themselves serve as buffer spaces, and also as connecting fluid channels to separate buffer spaces. Furthermore, since the penetrating sections are surrounded by plate members, they allow more reliable dimensional design of the fluid channels. It is thereby possible to effectively alleviate injection pressure of the potting agent BD. The first and second buffer spaces created by the partition member 6A absorb the rapid injection of the potting agent BD through  the duct section 51a, by temporarily holding the potting agent DB. Also, since the temporarily held potting agent BD can be injected over a long period of time between the hollow fiber membrane bundle 3 and the partition member, and between the hollow fiber membranes 2 of the hollow fiber membrane bundle 3, without being forced, it is possible to effectively inhibit buckling. As a result, the hollow fiber membrane module 1 of this embodiment maintains a straight line form of the hollow fiber membrane bundle 3 along the axial direction of the housing, as shown in Fig. 10(a). A partition member in which the pair of plate members are laid facing, as in this embodiment, serves as a buffer space itself, and as a connecting fluid channel to separate buffer spaces, is preferred from the viewpoint of conveniently ensuring a large buffer space and effectively inhibiting buckling. Furthermore, the pair of plate members are more preferably disposed in a cross shape, since this allows the space where the hollow fiber membrane bundle 3 is housed in the housing to be increased in a more reliable manner.

As shown in Fig. 7, the excessively filled potting agent BD overflows from the duct sections 16A, 16B formed on the sides of the housing body 11, and the boundary of the potting agent BD becomes essentially equal to the inner walls of the duct sections 16A, 16B.

When the potting agent BD cures and potting layers 7A, 7B are formed, potting agent dense sections are formed in the penetrating sections 21, 22, 23, 24, 26 of the partition members 6A, 6B, along the lengthwise direction of the hollow fiber membrane bundle 3, across the entire thickness of the potting layers 7A, 7B.

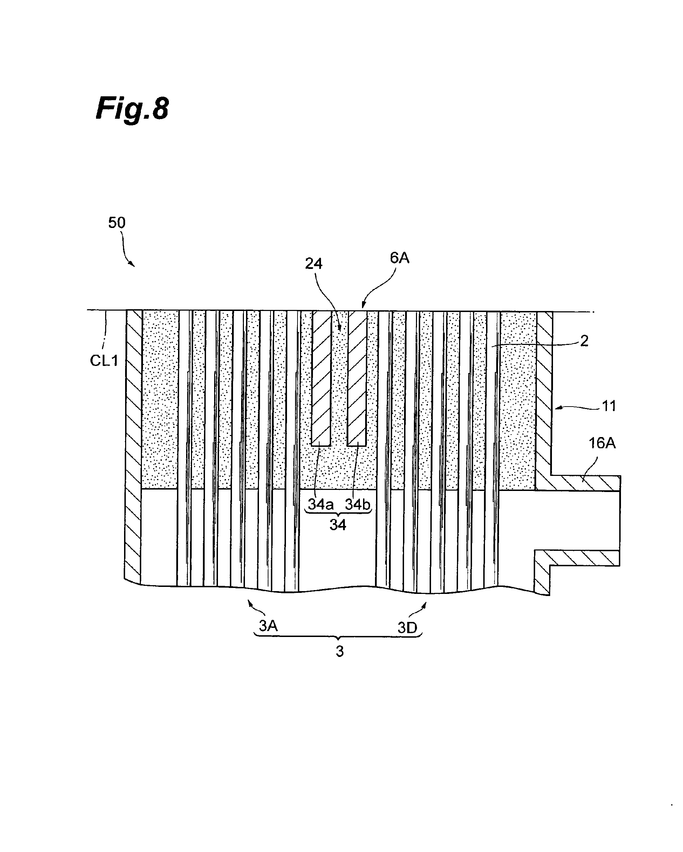

Next, both ends of the unit 50 are cut (step S50). Cutting the ends of the unit 50 forms open ends 2a, 2b in the hollow fiber membranes 2. Specifically, as shown in Fig. 7 and Fig. 8, cutting is performed at the section indicated as CL1, from the viewpoint of improving the manageability after cutting. This removes the caps 51 A, 51B, the trimmed sections 11a, 11b of the housing body 11, the ends of the hollow fiber membranes 2 filled in with the seal material (the sections sealed with the seal material), and the ends of the partition members 6A, 6B. The cutting may also be accomplished at the section indicated by CL2, from the viewpoint of dimensional stability of the module. This will also remove the caps 51A, 51B, the ends of the hollow fiber membranes 2 (the sections sealed with the seal material), and the ends of the partition members 6A, 6B.

Next, the caps 12A, 12B and fasteners 13A, 13B are attached (step S60). Upon completion of step S60, the step shown in Fig. 4 is completed and the hollow fiber membrane module 1 is complete.

The hollow fiber membrane module 1 produced in this manner is produced so that the ratio of the kinetic adsorption capacity in the form of the module with respect to the kinetic adsorption capacity in the form of the single filaments of the hollow fiber membranes is between 90% and 100%.

Also, the hollow fiber membrane module 1 produced in this manner has a volume fill factor of at least 30% and less than 70%, as the volume occupied by the hollow fiber membrane bundle 3 with respect to the volume of the housing body 11. The lower limit for the volume fill factor is preferably 40%, more preferably 50% and even more preferably 55%. The upper limit for the volume fill factor is preferably less than 70% and more preferably less than 68%. In other words, it is most preferably 55% or greater and less than 68%.

To more fully explain the method of calculating the volume fill factor, the volume fill factor Rv for the completed hollow fiber membrane module 1 is expressed by formula (1), where Vh is the internal volume of the housing body 11 and Vf is the volume of the hollow fiber membrane bundle 3.

$$Rv = Vf/Vh \ (1)$$

The volume Vf of the hollow fiber membrane bundle 3 is expressed by formula (2).

$$Vf = (Do/2)^2 \times \pi \times L' \times n \ (2)$$

Do is the mean outer diameter of the hollow fiber membrane 2, L' is the average effective length of the hollow fiber membranes 2, and n is the number of hollow fiber membranes 2 filled into the housing 4.

The internal volume Vh of the housing body 11 is expressed by formula (3).

$$Vh = (Dh/2)^2 \times \pi \times L \ (3)$$

Dh is the mean inner diameter of the housing body 11, and L is the distance between the boundaries of the potting layers 7A, 7B of the hollow fiber membrane module 1.

The volume fill factor Rv is calculated by disassembling the hollow fiber membrane module 1, and measuring the number n of filled hollow fiber membranes 2, the average effective length L' of the hollow fiber membranes 2, the mean outer diameter Do of the hollow fiber membranes 2, the mean inner diameter Dh of the housing body 11 and the distance L between the boundaries of the potting layers 7A, 7B. The hollow fiber membrane module 1 is disassembled, the hollow fiber membrane bundle 3 is cut out from the boundaries between the potting layers 7A, 7B, and the filled number n is counted. A number corresponding to 10% of the filled number n is sampled equally from the entire region of the hollow fiber membrane bundle 3, the lengths and outer diameters of each are measured, and the average value is calculated, to determine the average effective length L' and mean outer diameter Do, and then the volume Vf of the hollow fiber membrane bundle 3 is calculated by formula (2) above. On the other hand, the mean inner diameter Dh of the housing and the distance L between the boundaries of the potting layers 7A, 7B are measured from the disassembled housing body 11, and the internal volume Vh of the housing body 11 is calculated by formula (3).

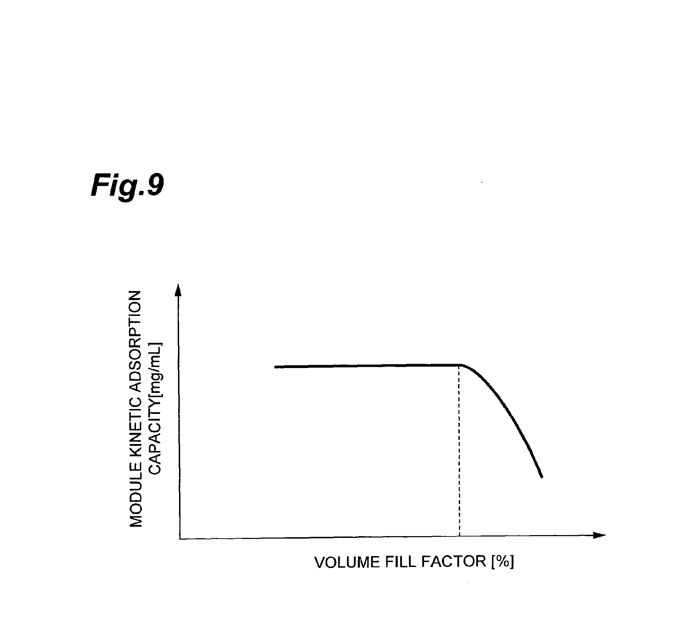

The volume fill factor will now be explained in greater detail with reference to Fig. 9 and Fig. 10. In Fig. 9, the abscissa represents the volume fill factor [%] as the volume occupied by the hollow fiber membrane bundle 3 with respect to the volume of the housing body 11, and the ordinate represents the adsorption capacity [mg/mL], as the adsorption [mg] of substances to be adsorbed per unit membrane volume [mL] of the hollow fiber membranes 2, in the form of the module.

As shown in Fig. 9, while the volume fill factor is low with the hollow fiber membrane module 1 employing adsorption membrane type hollow fiber membranes 2, the kinetic adsorption capacity in the form of the module is essentially constant regardless of increase or decrease in the volume fill factor, and high scalability is secured. However, when the volume fill factor exceeds a certain value, the kinetic adsorption capacity in the form of the module falls as the volume fill factor increases, and therefore high scalability is no longer secured. Based on research by the present inventors on the relationship between volume fill factor and the kinetic adsorption capacity in the form of the module, it has been found that the kinetic adsorption capacity in the form of the module is essentially kept constant with a volume fill factor of less than 70%. When the volume fill factor is less than 30%, on the other hand, the total volume of hollow fiber membranes filled with respect to the housing size is reduced, and the adsorption throughput capacity of the module with respect to the installment area decreases, lowering the treatment efficiency.

If the volume fill factor of the hollow fiber membranes 2 with respect to the housing body 11 is at least 30% and less than 70%, the adsorption throughput capacity will be secured, while the kinetic adsorption capacity in the form of the module will be able to be kept essentially constant (that is, the kinetic adsorption capacity in the form of the single filaments will be essentially equal). Since kinetic adsorption capacity is exhibited in the form of the module which is the same as the kinetic adsorption capacity of the single filaments, regardless of the size of the module in the small-size to large-size range, it is possible to ensure high scalability between modules of different sizes.

Incidentally, as shown in Fig. 10(b), the hollow fiber membrane bundle 3 is pushed in by the injection pressure of the potting agent BD, and buckles. If buckling of the hollow fiber membrane bundle 3 is large even when the design is for a volume fill factor of at least 30% and less than 70%, the volume fill factor will be larger than the design value.

The divergence between the design value and post-production value of the volume fill factor is evaluated by the degree of buckling (buckling rate). As will be explained in detail below, the buckling rate W is defined by formula (4), where Rv is the volume fill factor and Rv0 is the theoretical volume fill factor.

$$W = Rv/Rv0 \ (4)$$

The theoretical volume fill factor Rv0 is the volume fill factor in a state of absolutely no buckling (that is, with all of the hollow fiber membranes 2 filled in the hollow fiber membrane module being disposed in a straight linear fashion between the potting layers), and it is the volume fill factor in formula (2), used to determine the volume of the hollow fiber membrane bundle 3, wherein the distance L between the boundaries of the potting layers 7A, 7B of the hollow fiber membrane module 1 is substituted for the average effective length L' of the hollow fiber membranes 2. The buckling rate is in a numerical range of 100% or greater. It is preferably no greater than 120%, more preferably no greater than 110% and even more preferably no greater than 105%.

Buckling causes the volume fill factor to deviate significantly from the theoretical volume fill factor, and when the volume fill factor reaches an excessive value, variation occurs in the pressure difference between membranes of the hollow fiber membrane bundle 3, as mentioned above, and the treatment solution, which should be supplied to separation treatment uniformly across the entire regions of all of the hollow fiber membranes 2 in the module, begins to flow in local excess, producing a timing difference for adsorption breakthrough for the different hollow fiber membranes 2.

In an adsorption membrane, the amount of the substances to be adsorbed, which are retained and concentrated in the porous membrane, gradually increases as adsorption treatment progresses, and with continued adsorption treatment, leakage of the substances to be adsorbed toward the permeation side of the membrane, i.e. adsorption breakthrough, begins to occur. Thus, adsorption treatment must be completed before adsorption breakthrough occurs in the adsorption membrane.

Therefore, if there are differences in the timing at which adsorption breakthrough begins to occur, the function of the hollow fiber membrane module 1 as a whole ceases even if portions remain that are still capable of adsorption, and the quality of the treatment solution is reduced.

In contrast, the hollow fiber membrane module 1 of this embodiment has partition members 6A, 6B with penetrating sections 21, 22, 23, 24, 26 that penetrate in the lengthwise direction of the hollow fiber membranes 2, disposed so as to partition the small bundles 3A, 3B, 3C, 3D of the hollow fiber membrane bundle 3. The penetrating sections 21, 22, 23, 24, 26 formed by the partition members 6A, 6B function as buffer spaces and fluid channels during filling of the potting agent BD, allowing the load acting on the ends of the hollow fiber membrane bundle 3 to be reduced, and allowing buckling of the hollow fiber membrane bundle 3 to be inhibited, as shown in Fig. 10(a). It is thus possible to prevent the volume fill factor from exceeding the assumed value, and to eliminate differences in the timing at which adsorption breakthrough occurs in the hollow fiber membranes 2, thereby allowing high scalability to be ensured.

In addition, the hollow fiber membrane module 1 produced in this manner has a potting agent dense section percentage Rb of at least 3% and less than 60%, as the cross-sectional area of the potting agent dense sections with respect to the cross-sectional area occupied by the hollow fiber membrane bundle 3 (cross-sectional area occupied by fiber bundles Sf). The potting agent dense section percentage Rb is defined by formula (5).

$$Rb = Sb/Sf\,(5)$$

The lower limit for the potting agent dense section percentage Rb is more preferably 4% or greater and even more preferably 7% or greater, while the upper limit of the potting agent dense section percentage Rb is preferably less than 50% and more preferably less than 30%. In other words, it is most preferably at least 7% and less than 30%.

The "cross-sectional area occupied by fiber bundles" is the cross-sectional area occupied by the hollow fiber membrane bundle 3, and it is the cross-sectional area occupied by a roughly circumscribed circle around all of the small bundles 3A, 3B, 3C, 3D composing the hollow fiber membrane bundle 3.

The "cross-sectional area Sb of the potting agent dense sections" is the cross-sectional area of the sections densely filled with the potting agent (potting agent dense sections), within the sections included in the cross-sectional area occupied by the hollow fiber membrane bundle 3. Using the case shown in Fig. 2 as an example, the cross-sectional area occupied by fiber bundles Sf is the combined cross-sectional area of the small bundles 3A, 3B, 3C, 3D, the wall sections 31, 32, 33, 34 of the partition members 6A, 6B, and the penetrating sections 21, 22, 23, 24, 26 of the partition members 6A, 6B, and the cross-sectional area Sb of the potting agent dense sections is the cross-sectional area of the penetrating sections 21, 22, 23, 24, 26 of the partition members 6A, 6B. When the hollow fiber membrane bundle 3 has small bundles without a partition member, and gaps are formed between the small bundles where the potting agent is filled, the cross-sectional area Sb of the potting agent dense sections is the cross-sectional area of all of the sections where the potting agent is filled in the gaps between the small bundles, among the cross-sectional area included within the cross-sectional area occupied by fiber bundles.

Thus, if the potting agent dense section percentage Rb is limited to at least 3% and less than 60%, it is possible to control buckling, and easily obtain a volume fill factor of at least 30% and less than 70%.

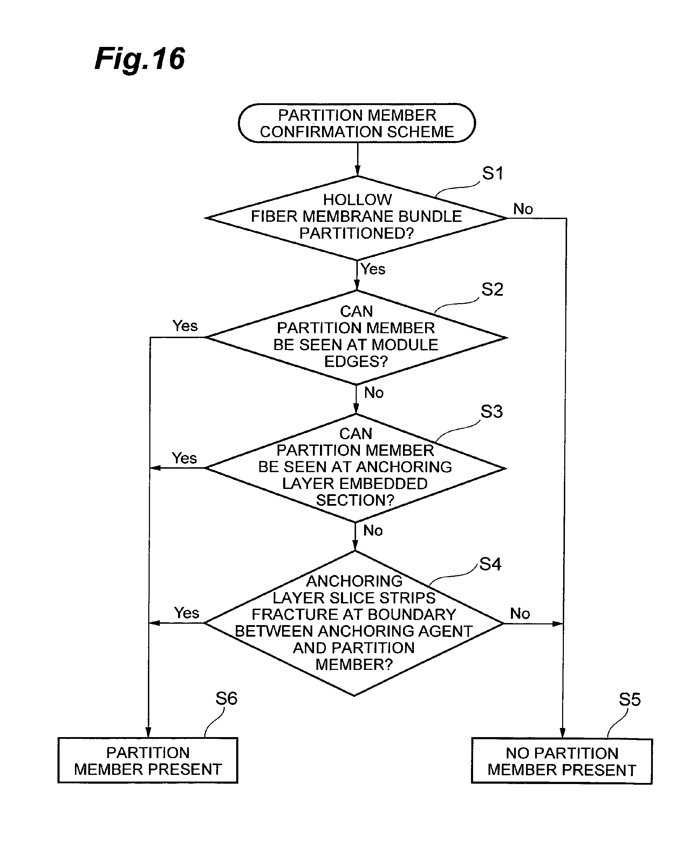

For calculation of the potting agent dense section percentage Rb, the border between the partition member and the potting agent in the potting layer may be ascertained to measure the dimensions, and the potting agent dense section percentage calculated. The border between the partition member and the potting agent is ascertained according to the scheme shown in Fig. 16.

In the scheme for ascertaining the border between the partition member and the potting agent, as shown in Fig. 16, first it is judged whether or not the hollow fiber membrane bundle is partitioned (step S1). If it is judged that the hollow fiber membrane bundle is not partitioned (step S1: NO), then it is judged that no partition member is present (step S5). If, on the other hand, it is judged that the hollow fiber membrane bundle is partitioned (step S1: YES), it is judged whether or not a partition member can be seen at the module edges (step S2). If it is judged that a partition member can be seen at the module edges (step S2: YES), then it is judged that a partition member is present (step S6). If, on the other hand, it is judged that a partition member cannot be seen at the module edges (step S2: NO), then it is judged whether or not a partition member can be seen at the potting layer embedded section (step S3). Step S3 can be judged, for example, by the difference in color of slice strips of the thinly sliced potting layer. If it is judged that a partition member can be seen at the potting layer embedded section (step S3: YES), then it is judged that a partition member is present (step S6). If, on the other hand, it is judged that a partition member cannot be seen at the potting layer embedded section (step S3: NO), it is then judged whether or not the potting layer slice strips fracture at the boundary between the potting agent and the partition member (step S4). If it is judged that the potting layer slice strips fracture at the boundary between the potting agent and the partition member (step S4: YES), then it is judged that a partition member is present (step S6). If, on the other hand, it is judged that the potting layer slice strips do not fracture at the boundary between the potting agent and the partition member (step S4: NO), then it is judged that no partition member is present (step S5). The border between the partition member and the potting agent is ascertained in this manner.

The small-bundled state that is to be maintained, is a state in which the hollow fiber membranes in the small bundle are situated at positions preferably within 12 times and more preferably within 10 times the outer diameter of the hollow fiber membranes, from any outer periphery. For example, if the outer diameters of the hollow fiber membranes are 3 mm, they are situated at positions preferably within 36 mm and more preferably within 30 mm, from any outer periphery. There are no particular restrictions on the cross-sectional shape of the small bundle in this state, and it may be a geometrical shape such as fan-shaped, circular, triangular, quadrilateral or hexagonal, or a combination of these geometrical shapes. The distance between the closest hollow fiber membranes is preferably between 1 mm and 30 mm and more preferably between 3 mm and 20 mm.

As explained above, the hollow fiber membrane module 1 of this embodiment, wherein the volume fill factor of the hollow fiber membranes 2 is at least 30% and less than 70% with respect to the housing body 11, can maintain an essentially constant kinetic adsorption capacity in the form of the module while ensuring throughput capacity, thus allowing highly stabilized scalability to be secured.

It is also possible to obtain sufficient precision with desired performance, particularly when the hollow fiber membrane module 1 is used for separation and purification for biological purposes.

For production of the hollow fiber membrane module 1, the  potting layers 7A, 7B are formed by filling the potting agent BD into the ends of the unit 50 comprising the hollow fiber membranes 2 and the housing body 11, but partitioning the small bundles 3A, 3B, 3C, 3D of the hollow fiber membrane bundle 3 by the partition members 6A, 6B forming the penetrating sections 21, 22, 23, 24, 26 allows the penetrating sections 21, 22, 23, 24, 26 to function as fluid channels for the potting agent BD. This reduces the load acting on the ends of the hollow fiber membrane bundle 3 and inhibits buckling of the hollow fiber membrane bundle 3, thereby preventing the volume fill factor of the hollow fiber membrane with respect to the cylinder from significantly deviating from the design value and allowing high scalability to be maintained, while also minimizing reduction of hollow fiber membrane module function and loss of treatment solution quality due to variations in the volume fill factor.

The partition members 6A, 6B also create divisions into small bundles 3A, 3B, 3C, 3D where the potting agent mass has been split. The potting agent forming the potting layers 7A, 7B release heat during curing, resulting in a larger curing heat value with greater potting agent mass, and thereby also increasing cooling shrinkage. Therefore, by dividing the potting agent mass it is possible to reduce the curing heat value per mass of potting agent, minimizing cooling shrinkage and preventing generation of peeling or cracking of the potting layers 7A, 7B.

The invention is not limited to the embodiment described above. For example, although the example for this embodiment was a hollow fiber membrane module 1 comprising a hollow fiber membrane bundle  3 split into small bundles 3A, 3B, 3C, 3D, with partition members 6A, 6B and potting layers 7A, 7B, the hollow fiber membrane module may have any construction so long as the volume fill factor is at least 30% and less than 70%, as the volume occupied by the hollow fiber membranes with respect to the volume of the cylinder.

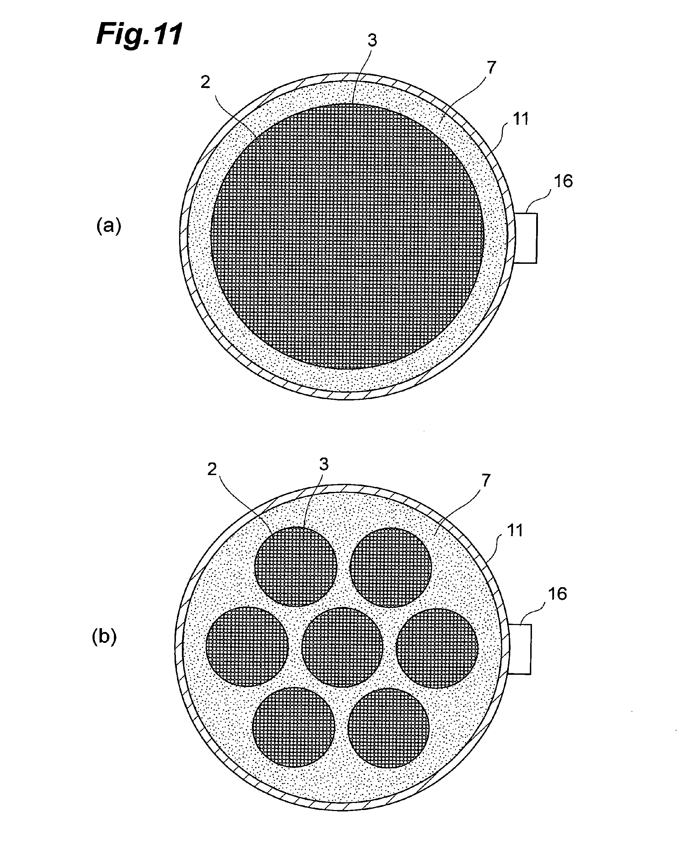

For example, a hollow fiber membrane bundle 3 composed of a plurality of hollow fiber membranes 2 may be fitted in the housing body as small bundles without being split, and a potting layer 7 formed surrounding the hollow fiber membrane bundle 3, as in the hollow fiber membrane module shown in Fig. 11 (a).

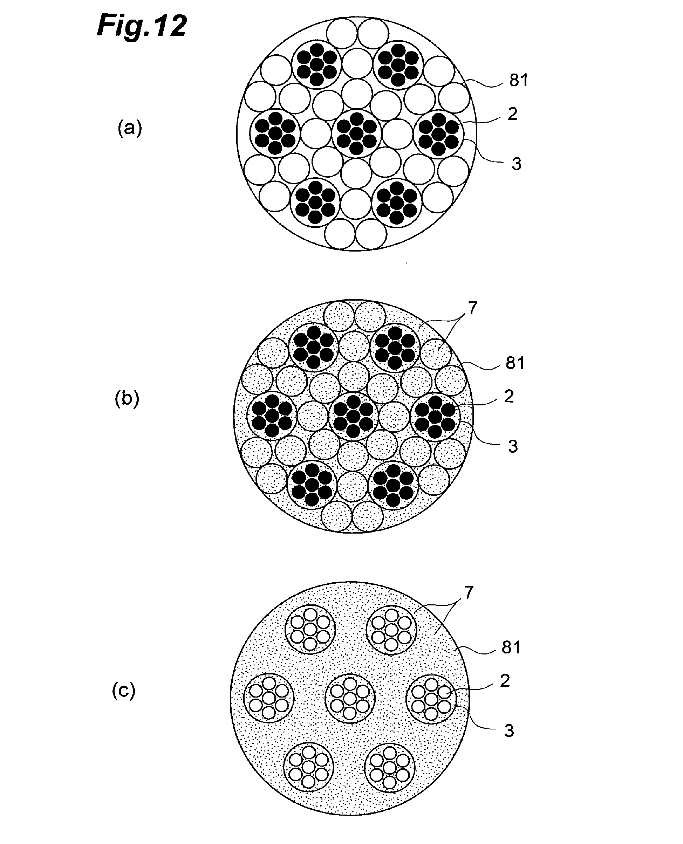

Also, the potting layer may have a potting agent dense section formed extending across the entire thickness of the potting layer along the lengthwise direction of the hollow fiber membrane, without necessarily providing a partition member. For example, a pipe member extending across the entire thickness of the potting layer, along the lengthwise direction of the hollow fiber membranes, may be disposed near the central axis of the hollow fiber membrane bundle, the interior of the pipe of the pipe member serving as a "buffer space" which is filled with the potting agent to form a potting layer. Also, as in the hollow fiber membrane module shown in Fig. 11 (b), the hollow fiber membrane bundle 3 composed of a plurality of hollow fiber membranes 2 may be split into a plurality of small bundles, and each small bundle disposed with a space between them, or each small bundle disposed with some of the small bundles in contact, and the spaces between small bundles used as "buffer spaces" to form a potting layer 7 between the small bundles. The hollow fiber membrane module  shown in Fig. 11(b) may be produced by the method illustrated in Fig. 12, for example.

First, as shown in Fig. 12(a), there are prepared a plurality of small hollow fiber membrane bundles 3 comprising bundles of a plurality of hollow fiber membranes 2 sealed at the ends. An elongated straw-shaped potting agent-injecting member 81 is situated between each of the hollow fiber membrane bundles 3 so that they are disposed with spaces between the hollow fiber membrane bundles 3 in the housing body, to assemble a unit. Thus, due to the potting agent-injecting member 81, the ends of the hollow fiber membranes 2 in which the potting layer 7 is to be formed penetrate in the lengthwise direction of the hollow fiber membrane bundles 3.

Next, as shown in Fig. 12(b), the potting agent is filled in through both ends of the unit. Thus, since the penetrating sections of the potting agent-injecting member 81 function as fluid channels for the potting agent, the filled potting agent flows into the housing body through the penetrating sections of the potting agent-injecting member 81. Curing of the potting agent then forms a potting layer 7 that pots the hollow fiber membrane bundles 3 to the housing body. This situates each of the small bundles with space between them, and forms potting agent dense sections in the potting layer 7 formed between the small bundles, extending across the entire region in the lengthwise direction of the hollow fiber membranes 2.

Next, as shown in Fig. 12(c), both ends of the unit are cut to remove the seals of the hollow fiber membranes 2 and open the ends of the hollow fiber membranes 2. In Fig. 12(c), the potting agent-injecting  members 81 do not remain on the cut surface because the potting agent-injecting members 81 are cut together with the cut fragments during cutting of both ends of the unit, but when long potting agent-injecting members 81 are used, the potting agent-injecting members 81 may remain on the cut surface. By attaching a cap on the unit, production of the hollow fiber membrane module shown in Fig. 11(b) is complete.

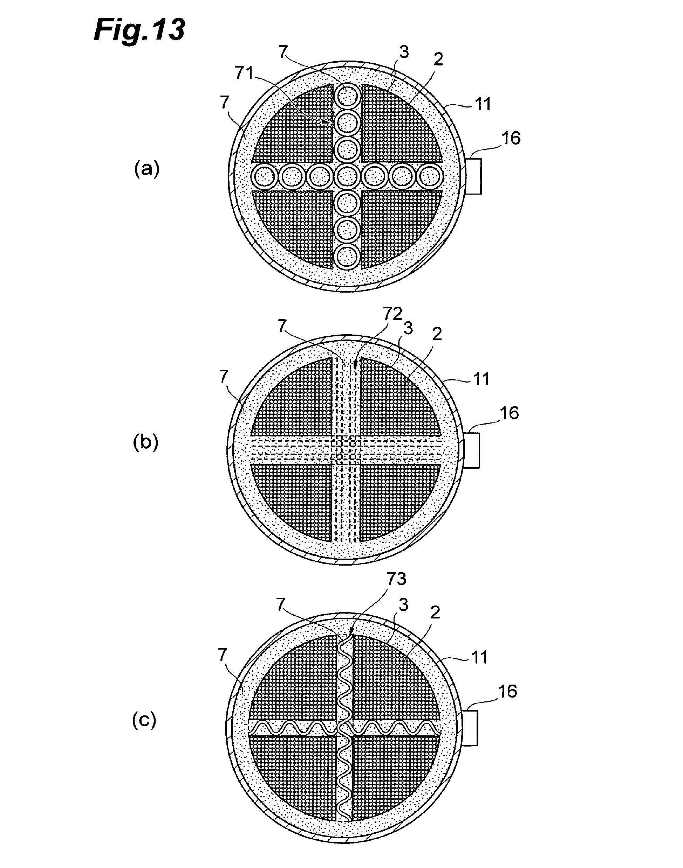

Also, any construction may be employed for the partition member so long as it is composed not only of plate members but also penetrating sections that penetrate in the lengthwise direction of the hollow fiber membranes 2. For example, a plurality of cylindrical members having penetrating sections formed penetrating in the lengthwise direction of the hollow fiber membrane bundles 3 may be linked, similar to the partition member 71 of the hollow fiber membrane module shown in Fig. 13(a), forming a cross shape overall. Also, a plurality of nets may be laid facing each other at a fixed spacing, similar to the partition member 72 of the hollow fiber membrane module shown in Fig. 13(b), the nets crossing to form a cross shape. Alternatively, similar to the partition member 73 of the hollow fiber membrane module shown in Fig. 13(c), a cross shape may be formed by crossing flat plates having a wavy interior surrounded by a net (or plate member), similar to a cardboard-like cross-sectional structure.

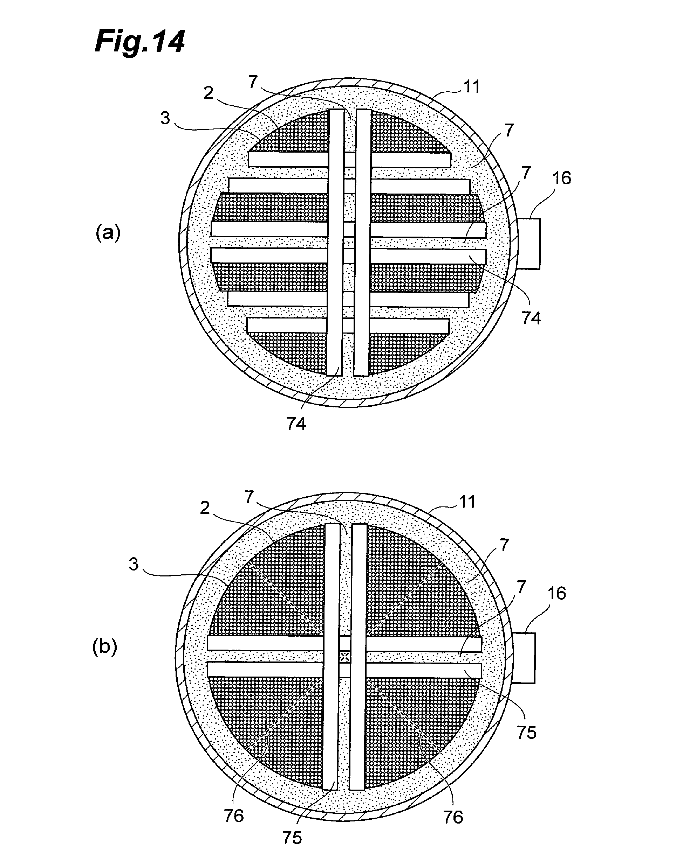

The partition member is not limited to a cross shape, and various other shapes may be employed. For example, a pair of mutually opposing plate members may be arranged laterally in groups of three and in a vertical pair, for partitioning into 8 small hollow fiber membrane bundles 3, similar to the partition member 74 of the hollow fiber membrane module shown in Fig. 14(a).

Also, the partitioning means for the hollow fiber membrane bundles 3 is not limited to a partition member, and for example, the hollow fiber membrane bundle 3 may be split with splitting nets 76, as shown in Fig. 14(b). By thus splitting the hollow fiber membrane bundle 3 with splitting nets 76, it is possible to further reduce the sizes of the hollow fiber membrane bundles 3.

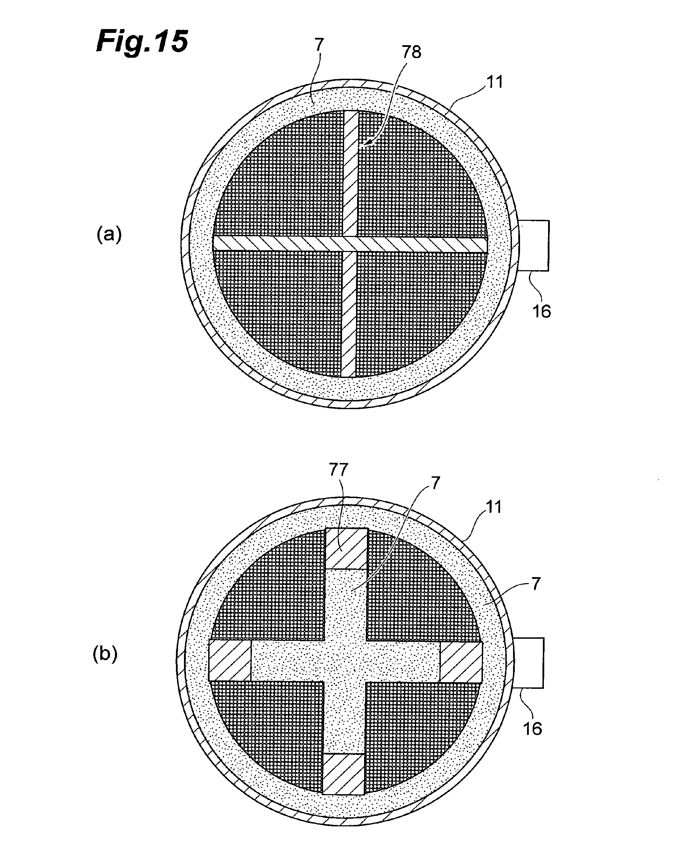

Also, as shown in Fig. 15(a), the partition member 78 may be a single flat plate crossing in a cross shape, without providing penetrating sections. Also, by placing a block-shaped spacer 77 between the reduced-sized hollow fiber membrane bundles 3, instead of a partition member, as shown in Fig. 15(b), it is possible to allow inflow of potting agent between the hollow fiber membrane bundles 3 to form a potting layer 7, without completely partitioning the hollow fiber membrane bundles 3.

The partition member may have any structure so long as it has buffer spaces that allow injection pressure of the potting agent to escape during filling of the potting agent.

In this case, the partition member more preferably has a structure with fluid channels that guide the potting agent, up to the spaces between the outer periphery of the hollow fiber membrane bundles 3, and the inner wall sides of the housing body 11 (the second buffer space).

For example, in a partition member having penetrating sections that penetrate in the lengthwise direction, one side end in the axial direction of the partition member at the penetrating sections, and the side sections of the penetrating sections (the sections facing the housing body when the unit has been assembled), may be blocked so long as there is at least one hole of a size that at least allows air to escape.

For example, the one side end of the penetrating sections of the partition members 6A, 6B may be blocked by a covering with a small hole opening, and the side sections of the penetrating sections of the partition members 6A, 6B may be completely blocked by a covering without holes. In this case, one end covered with a covering is disposed on the boundary side of the potting layer. The other end which is open, being not covered with a covering, is an opening through which the potting agent flows in, and it functions as a space for formation of the potting agent dense section, i.e. as a buffer space. This allows buckling to be minimized. Since air can escape from the small hole provided in the covering, the potting agent can be filled into the penetrating sections.

Also, the structure may be one in which one side end of the penetrating sections of the partition members 6A, 6B is blocked by a covering without holes, and the side sections of the penetrating sections of the partition members 6A, 6B are completely blocked by a covering with a small hole opening. In this case, the small hole is formed near the one end covered with the covering, while the other end covered by the covering is disposed on the boundary side of the potting layer. Also, similar to the case described above, the potting agent can be filled and buckling can be minimized.

In addition, in a partition member having a pair of plate members that are mutually opposing, the pair of plate members do not need to be situated parallel to the axial direction and/or the direction perpendicular to the axis. In this case, the pair of plate members are preferably situated in parallel in order to allow the number of filling filaments to be increased.

It may also be applied, for example, to known hollow fiber membrane module technology, such as a form in which only one end of the hollow fiber membrane bundle is opened and the opposite end is occluded, as in PTL 2.

Examples

The present invention will now be explained through examples and comparative examples. However, the invention is not limited to the examples described below.

[Evaluation method 1] Method of confirming dimensions of hollow fiber membranes and housing by module disassembly

The hollow fiber membrane module 1 was disassembled by the following procedure and the number of membranes and their dimensions were measured, to obtain the "number of filled hollow fiber membranes", the "hollow fiber membrane average effective length L"', the "hollow fiber membrane mean inner diameter Di", the "hollow fiber membrane mean outer diameter Do", the "housing mean inner diameter Dh" and the "distance between potting layer boundaries L".

The "number of filled hollow fiber membranes" was confirmed first. Firstly, the hollow fiber membrane module was carefully disassembled, and then the hollow fiber membrane bundle was cut off at the potting layer boundary, and the hollow fiber membrane bundle was extracted. Finally, the number of hollow fiber membranes composing the hollow fiber membrane bundle was counted to obtain the "number of filled hollow fiber membranes".

Secondly, the "hollow fiber membrane average effective length L'", "hollow fiber membrane mean inner diameter Di" and "hollow fiber membrane mean outer diameter Do" were confirmed from the taken hollow fiber membranes. First, a number of hollow fiber membranes corresponding to 10% of the number were taken from across the entire extracted hollow fiber membrane bundle, as representative samples. Next, the length, inner diameter and outer diameter of each individual hollow fiber membrane among the taken representative samples was measured. The average values for the measured length, inner diameter and outer diameter were calculated to obtain the "hollow fiber membrane average effective length L'", "hollow fiber membrane mean inner diameter Di" and "hollow fiber membrane mean outer diameter Do". A Measuring Microscope MM-40 by Nikon was used for measurement of the inner diameters and outer diameters of the hollow fiber membranes.

Thirdly, the "housing mean inner diameter Dh" and "distance between potting layer boundaries L" were confirmed from the disassembled housing body. The dimensions are measured at several locations for the module from which the hollow fiber membrane bundle had been cut out, and their averages used to obtain the "housing mean inner diameter Dh" and "distance between potting layer boundaries L".

[Evaluation method 2] Calculation of hollow fiber membrane bundle volume fill factor

The "hollow fiber membrane bundle volume fill factor Rv" was determined from the "hollow fiber membrane bundle volume Vf" and the "housing internal volume Vh".

The "hollow fiber membrane bundle volume Vf" was calculated by substituting n, Do and L' obtained by Evaluation method 1, into formula (6). The "housing internal volume Vh" was calculated by substituting Dh and L, obtained by Evaluation method 1, into formula (7).

$$Vf = (Do/2)^2 \times \pi \times L' \times n \ (6)$$

$$Vh = (Dh/2)^2 \times \pi \times L \ (7)$$

The "hollow fiber membrane volume fill factor Rv" was calculated by substituting the "hollow fiber membrane bundle volume Vf" and "housing internal volume Vh", determined from formula (6) and formula (7), into formula (8).

$$Rv = Vf/Vh \ (8)$$

[Evaluation method 3] Calculation of hollow fiber membrane buckling rate

The "buckling rate W", which represents buckling of the hollow fiber membranes, was determined from formula (9) using the volume fill factor Rv and the theoretical volume fill factor Rv0.

$$W = Rv/Rv0 \ (9)$$

The theoretical volume fill factor Rv0 is the fill factor in a state of absolutely no buckling (that is, with all of the hollow fiber membranes filled in the hollow fiber membrane module being aligned in a straight line between the potting layers). Representing the hollow fiber membrane bundle volume at the theoretical volume fill factor as Vf0, then Vf0 can be expressed by formula (10), using the distance between boundaries L obtained by evaluation method 1 for the potting layer.

$$Vf0 = (Do/2)^2 \times \pi \times L \times n \ (10)$$

The "buckling rate W" was calculated by substituting formula (8) and formula (10) into formula (9). Developing formula (9), the buckling rate W can be simplified to formula (11).

$$W = L'/L \ (11)$$

[Evaluation method 4] Calculation of volume of hollow fiber membranes filled into adsorption membrane module

The "volume of hollow fiber membranes filled into the hollow fiber membrane module Vmm" was calculated by substituting n, Di, Do and L' obtained by Evaluation method 1, into formula (12). For a hollow fiber membrane, it is suitable to use the toroidal volume of the hollow fiber membrane as the membrane volume of the portion contributing to adsorption. The hollow fiber membrane volume Vmm is: circumscribed cross-sectional area $\times$ average effective length $\times$ filled membrane number, and is represented by formula (12).

$$Vmm = \{(Do/2)^2 - (Di/2)^2\} \times \pi \times L' \times n \ (12)$$

[Evaluation method 5] Calculation of potting agent dense section percentage of potting layer

The potting agent dense section percentage Rb of the potting layer is defined by formula (13), as the cross-sectional area of the potting agent dense section (potting agent dense section cross-sectional area Sb) with respect to the cross-sectional area occupied by the hollow fiber membrane bundles (cross-sectional area occupied by fiber bundles Smb).

$$Rb = Sb/Smb \ (13)$$

The "cross-sectional area occupied by fiber bundles Smb" is the cross-sectional area of the region enclosed entirely by the hollow fiber membrane bundles. For example, when the hollow fiber membranes are split into a plurality of small bundles, it is the cross-sectional area occupied by the minimum rough circumscribed circle containing all of the small bundles. The "potting agent dense section cross-sectional area Sb" is the cross-sectional area of the sections filled with the potting agent, within the sections included in the cross-sectional area occupied by the hollow fiber membrane bundles.
The "cross-sectional area occupied by fiber bundles Smb" and "potting agent dense section cross-sectional area Sb" will now be explained for Fig. 2 as an example. The "cross-sectional area occupied by fiber bundles Smb" is the combined cross-sectional area of the small bundles 3A, 3B, 3C, 3D, the wall sections 31, 32, 33, 34 of the partition members 6A, 6B, and the penetrating sections 21, 22, 23, 24, 26 of the partition members 6A, 6B. The "potting agent dense section cross-sectional area Sb" is the cross-sectional area of the penetrating sections 21, 22, 23, 24, 26 of the partition members 6A, 6B.
As a different example from Fig. 2, the "cross-sectional area occupied by fiber bundles Smb" and "potting agent dense section cross-sectional area Sb" will now be explained, for a cases where the hollow fiber membrane bundles 3 are small bundles without a partition member, and gaps are formed between the small bundles where the potting agent is filled. The potting agent dense section cross-sectional area is the cross-sectional area of all of the sections where the potting agent fills the gaps between small bundles, within the cross-sectional area included within the cross-sectional area occupied by fiber bundles.
For calculation of the potting agent dense sections, the border between the partition member and the potting agent in the potting layer may be ascertained to measure the dimensions, and the potting agent dense sections calculated. Ascertainment of the borders between the partition member and potting agent is accomplished by the scheme shown in Fig. 16, as explained above.

[Evaluation method 6] Method of preparing solution for measurement of adsorption performance

A reference protein was used as the substance to be adsorbed. It is preferred to use a protein most suitable for indicating performance of the purification apparatus, and commonly used proteins include BSA (bovine serum albumin) and lysozyme. Usually, BSA is used for evaluation of an anion exchange membrane while lysozyme is used for evaluation of a cation exchange membrane, but suitable selection may be made depending on the evaluation conditions (pH, buffer, etc.). For this example, BSA by Sigma was used as the reference protein. Measurement of adsorption performance using a commercial purified protein product as the substance to be adsorbed is commonly employed as a means of demonstrating performance by biotechnology purification apparatuses.
The method of preparing the solution used for the evaluation was as follows.

<Tris-hydrochloride buffer (buffer)>

After dissolving tris(hydroxymethyl)aminomethane (Nacalai Tesque, Inc.) in ultrapure water, hydrochloric acid was added to pH 8, and the concentration was adjusted to 20 mmol/L (pH 8). The portion passing through a 0.45 $\mu$m pore size filter was then used.

<BSA solution>

BSA was dissolved in 20 mmol/L (pH 8)Tris-HCl buffer to 1 [g(BSA)/L (buffer)]. The portion passing through a 0.45 $\mu$m pore size filter was used.

<Salt buffer>

NaCl (Wako reagent grade) was dissolved in the Tris-HCl buffer, to prepare buffer containing sodium chloride at 1 mol/L concentration. The portion passing through a 0.45 $\mu$m pore size filter was then used.

[Evaluation method 7] Method of evaluating adsorption performance of adsorption membrane module for reference protein

A high-performance liquid chromatography (HPLC) system was used for evaluation of the adsorption performance of the adsorption membrane module for the reference protein. The HPLC apparatus used was a "BP-5000S-L" medium pressure chromatograph by YMC, comprising a liquid pump, flowmeter, pressure gauge and visible-ultraviolet spectrophotometer.

Preparation prior to measurement of the adsorption performance was as follows. First, the hollow fiber membrane module was potted in a standing state, and the supply tubing from HPLC was connected to the lower cap of the hollow fiber membrane module. Next, the air was discharged from inside the module while supplying fluid to the module. The HPLC in-tubing was then connected to the lower side nozzle of the hollow fiber membrane module, and the upper cap and lower side nozzle were sealed. That is, the hollow fiber membrane module was set in a state allowing total filtration of the internal pressure filtration system.

Measurement of the adsorption performance was carried out by filtering solutions in the following order. Specifically, firstly buffer was used for equilibration of the adsorption membrane module, secondly the reference protein solution was used for adsorption of protein, thirdly buffer was again used for cleaning of the free protein that had not been adsorbed onto the adsorption membrane, fourthly salt buffer was used for elution of the adsorbed protein that had been adsorbed onto the adsorption membrane, and fifthly buffer was again used for regeneration to lower the salt concentration of the adsorption membrane module. Each solution was continuously used for internal pressure total filtration at a constant flow rate through the hollow fiber membrane module. Also, the adsorption behavior and elution profile of the protein were monitored using a visible-ultraviolet spectrophotometer, and the leakage trend of protein to the filtrate side was confirmed based on change in absorbance at a wavelength of 280 nm.

[Evaluation method 8] Method of evaluating adsorption performance of adsorption hollow fiber membrane for reference protein

A tube pump was used to evaluate the adsorption performance of the adsorption hollow fiber membrane for the reference protein. To a liquid flow rate-adjusted tube pump there were connected a pressure gauge and an adsorption hollow fiber membrane with an effective membrane length of 7 cm, and the air in the hollow section was eliminated to create a state allowing total filtration in the internal pressure filtration system.

The adsorption performance was measured by the same procedure as in Evaluation method 7. However, the protein adsorption behavior and elution profile were confirmed by fractionating and extracting the filtrate with a Fraction Collector at fixed time intervals, and then using a visible-ultraviolet spectrophotometer to monitor the change in absorbance at 280 nm for each fraction of the filtrate.

[Evaluation method 9] Calculation of kinetic adsorption capacity of adsorption membrane module

The filtrate volume [mL] was confirmed at the point where the absorbance after filtration was 10% of the absorbance of the reference protein solution (stock solution) before filtration, based on the protein leakage trend to the filtrate side during the reference protein adsorption process in Evaluation method 7. Also, by converting the filtrate volume to protein weight based on a relationship of 1 g/L, the protein adsorption [mg] at the point of 10% absorbance was calculated. The protein adsorption [mg] was divided by the volume of the hollow fiber membranes filled into the adsorption membrane module, determined by Evaluation method 4 Vmm [mL], to calculate the protein adsorption [mg/mL] per unit membrane volume in the form of the module.

The protein adsorption per unit membrane volume at the point of 10% absorbance by the filtrate was designated as the "kinetic adsorption capacity". The kinetic adsorption capacity calculated by this method is referred to as the kinetic adsorption capacity in the form of the module, or simply as the "module adsorption capacity". The term "kinetic adsorption capacity" is most commonly used in fields of purification for biotechnology.

[Evaluation method 10] Calculation of kinetic adsorption capacity of adsorption hollow fiber membrane

Based on the value obtained in Evaluation method 8, the same procedure was carried out as in Evaluation method 9 to calculate the protein adsorption [mg/mL] per unit membrane volume in the form of the adsorption hollow fiber membrane. However, since the volume Vmm [mL] of the hollow fiber membrane in Evaluation method 8 is expressed as toroidal cross-sectional area × effective membrane length, it was determined by substituting Di and Do determined in Evaluation method 1 and the effective membrane length Ls of the hollow fiber membrane used for the evaluation, into formula (14).

$$Vms = = \{(Do/2)^2 - (Di/2)^2\} \times \pi \times Ls \ (14)$$

The kinetic adsorption capacity in the form of the adsorption hollow fiber membrane, calculated by this method, is referred to as the kinetic adsorption capacity in the form of the single filaments, or simply as the "single filament adsorption capacity", and it is used for comparison with the "module adsorption capacity" indicated in [Evaluation method 9].

[Evaluation method 11] Calculation of scalability of adsorption performance

The "adsorption membrane module scalability" is defined by formula (15), using the "kinetic adsorption capacity in the form of the single filaments of the hollow fiber membrane" obtained in Evaluation method 10, and the "kinetic adsorption capacity of the adsorption membrane module" obtained in Evaluation method 9.

$$Scalability\ of\ adsorption\ membrane\ module = (kinetic\ adsorption\ capacity\ of\ module)/(kinetic\ adsorption\ capacity\ of\ single\ filaments) \times 100 \ (15)$$

[Evaluation method 12] Method of evaluating durability of potting layer

For evaluation of the durability of the potting layer, the hollow fiber membrane module was repeatedly used a maximum of 10 times, and  the number of defects occurring in the potting layer was counted. Specifically, the potting layer durability evaluation was recorded as the durability in terms of the number of repeated times of use without defects occurring in the potting layer. For example, beginning the count at 1 for the initial adsorption and elution, a durability of "one use" was recorded if defects in the potting layer occurred during the second use. The hollow fiber membrane of the adsorption membrane can elute proteins to be adsorbed by varying, for example, the series of operating procedures described in Evaluation method 7, or the conditions of the supplied fluid (pH, conductivity, etc.).

Examples 1 to 11 and Comparative Examples 1 and 2 will now be described in detail with reference to Tables 1 to 3. Three modules (A, B, C) were prepared by the same method as in the examples, according to the production method described for the previous embodiment (see Fig. 4).

For module A, first the adsorption of the module was evaluated according to Evaluation methods 6 and 7. Next, the module was disassembled according to Evaluation methods 1, 2, 3 and 4, and the volume fill factor Rv, buckling rate W and membrane volume Vmm were calculated. The adsorption capacity per unit membrane volume in the form of the module was then calculated by Evaluation method 9. The potting agent dense section percentage Rb was also calculated according to Evaluation method 5.

For module B, first the module was disassembled according to Evaluation methods 1, 2, 3 and 4, and the volume fill factor Rv and buckling rate W were calculated. Next, the adsorption capacity per  unit membrane volume in the form of the single filaments was calculated according to Evaluation method 10, from the disassembled and sampled adsorption membranes. The potting agent dense section percentage Rb was also calculated according to Evaluation method 5.

The adsorption membrane module scalability was calculated according to Evaluation method 11, based on the module adsorption capacity of module A and the single filament adsorption capacity of module B.

Also, by comparing the buckling rates of module A and module B calculated by Evaluation method 3, the buckling rate variation was compared using the absolute value of their difference as the difference in buckling rates.

The durability of the potting layer of Module C was evaluated according to Evaluation method 12.

[Table 1]

| | Module | Hollow fiber membrane module specifications | | | | | | | | | |
|---|---|---|---|---|---|---|---|---|---|---|---|
| | | Housing mean inner diameter Dh | Distance between boundaries L | Number filled n | Hollow fiber membrane average effective length L' | Hollow fiber membrane mean inner diameter Di | Hollow fiber membrane mean outer diameter Do | Membrane volume (based on outer diameter) Vf | Toroidal membrane volume (toroidal section) Vmm | Theoretical volume fill factor RvO | Volume fill factor Rv |
| | | [mm] | [mm] | [count] | [mm] | [mm] | [mm] | [mL] | [mL] | [%] | [%] |
| Example 1 | 1A | 104.7 | 190.0 | 460 | 206 | 2.26 | 3.69 | 1013 | 633 | 57.1 | 61.9 |
| | 1B | 104.7 | 190.0 | 460 | 212 | 2.26 | 3.69 | 1043 | 652 | 57.1 | 63.8 |
| | 1C | 104.7 | 190.0 | 460 | - | 2.26 | 3.69 | - | - | - | - |
| Example 2 | 2A | 104.7 | 190.0 | 510 | 206 | 2.26 | 3.69 | 1124 | 702 | 63.3 | 68.7 |
| | 2B | 104.7 | 190.0 | 510 | 213 | 2.26 | 3.69 | 1162 | 726 | 63.3 | 71.0 |
| | 2C | 104.7 | 190.0 | 510 | - | 2.26 | 3.69 | - | - | - | - |
| Example 3 | 3A | 104.7 | 190.0 | 480 | 197 | 2.26 | 3.69 | 1011 | 632 | 59.6 | 61.8 |
| | 3B | 104.7 | 190.0 | 480 | 198 | 2.26 | 3.69 | 1016 | 635 | 59.6 | 62.1 |
| | 3C | 104.7 | 190.0 | 480 | - | 2.26 | 3.69 | - | - | - | - |
| Example 4 | 4A | 104.7 | 190.0 | 480 | 190 | 2.26 | 3.69 | 975 | 609 | 59.6 | 59.6 |
| | 4B | 104.7 | 190.0 | 480 | 190 | 2.26 | 3.69 | 975 | 609 | 59.6 | 59.6 |
| | 4C | 104.7 | 190.0 | 480 | - | 2.26 | 3.69 | - | - | - | - |
| Example 5 | 5A | 104.7 | 190.0 | 540 | 190 | 2.26 | 3.69 | 1097 | 686 | 67.1 | 67.1 |
| | 5B | 104.7 | 190.0 | 540 | 190 | 2.26 | 3.69 | 1097 | 686 | 67.1 | 67.1 |
| | 5C | 104.7 | 190.0 | 540 | - | 2.26 | 3.69 | - | - | - | - |
| Example 6 | 6A | 104.7 | 190.0 | 512 | 205 | 2.26 | 3.69 | 1122 | 701 | 63.6 | 68.6 |
| | 6B | 104.7 | 190.0 | 512 | 211 | 2.26 | 3.69 | 1155 | 722 | 63.6 | 70.6 |
| | 6C | 104.7 | 190.0 | 512 | - | 2.26 | 3.69 | - | - | - | - |

EP 2 659 951 A1

| | Module | Hollow fiber membrane module specifications | | | | | | | | | |
|---|---|---|---|---|---|---|---|---|---|---|---|
| | | Housing mean inner diameter Dh | Distance between boundaries L | Number filled n | Hollow fiber membrane average effective length L' | Hollow fiber membrane mean inner diameter Di | Hollow fiber membrane mean outer diameter Do | Membrane volume (based on outer diameter) Vf | Toroidal membrane volume (toroidal section) Vmm | Theoretical volume fill factor RvO | Volume fill factor Rv |
| | | [mm] | [mm] | [count] | [mm] | [mm] | [mm] | [mL] | [mL] | [%] | [%] |
| Example 7 | 7A | 104.7 | 190.0 | 460 | 193 | 2.26 | 3.69 | 949 | 593 | 57.1 | 58.0 |
| | 7B | 104.7 | 190.0 | 460 | 193.5 | 2.26 | 3.69 | 952 | 595 | 57.1 | 58.2 |
| | 7C | 104.7 | 190.0 | 460 | - | 2.26 | 3.69 | - | - | - | - |
| Example 8 | 8A | 104.7 | 190.0 | 340 | 190 | 2.26 | 3.69 | 691 | 432 | 42.2 | 42.2 |
| | 8B | 104.7 | 190.0 | 340 | 190 | 2.26 | 3.69 | 691 | 432 | 42.2 | 42.2 |
| | 8C | 104.7 | 190.0 | 340 | - | 2.26 | 3.69 | - | - | - | - |
| Example 9 | 9A | 104.7 | 190.0 | 460 | 190 | 2.26 | 3.69 | 935 | 584 | 57.1 | 57.1 |
| | 9B | 104.7 | 190.0 | 460 | 190 | 2.26 | 3.69 | 935 | 584 | 57.1 | 57.1 |
| | 9C | 104.7 | 190.0 | 460 | - | 2.26 | 3.69 | - | - | - | - |
| Example 10 | 10A | 104.7 | 190.0 | 460 | 190 | 2.26 | 3.69 | 935 | 584 | 57.1 | 57.1 |
| | 10B | 104.7 | 190.0 | 460 | 190 | 2.26 | 3.69 | 935 | 584 | 57.1 | 57.1 |
| | 10C | 104.7 | 190.0 | 460 | - | 2.26 | 3.69 | - | - | - | - |
| Example 11 | 11A | 104.7 | 190.0 | 332 | 190 | 2.26 | 3.69 | 675 | 422 | 41.2 | 41.2 |
| | 11B | 104.7 | 190.0 | 332 | 190 | 2.26 | 3.69 | 675 | 422 | 41.2 | 41.2 |
| | 11C | 104.7 | 190.0 | 332 | - | 2.26 | 3.69 | - | - | - | - |
| Comp.Ex. 1 | 1'A | 104.7 | 190.0 | 560 | 204 | 2.26 | 3.69 | 1222 | 763 | 69.6 | 74.7 |
| | 1'B | 104.7 | 190.0 | 560 | 209 | 2.26 | 3.69 | 1252 | 782 | 69.6 | 76.5 |
| | 1'C | 104.7 | 190.0 | 560 | - | 2.26 | 3.69 | - | - | - | - |

EP 2 659 951 A1

| | Module | Hollow fiber membrane module specifications | | | | | | | | | |
|---|---|---|---|---|---|---|---|---|---|---|---|
| | | Housing mean inner diameter Dh | Distance between boundaries L | Number filled n | Hollow fiber membrane average effective length L' | Hollow fiber membrane mean inner diameter Di | Hollow fiber membrane mean outer diameter Do | Membrane volume (based on outer diameter) Vf | Toroidal membrane volume (toroidal section) Vmm | Theoretical volume fill factor RvO | Volume fill factor Rv |
| | | [mm] | [mm] | [count] | [mm] | [mm] | [mm] | [mL] | [mL] | [%] | [%] |
| Comp.Ex. 2 | 2'A | 130.0 | 936.0 | 880 | 1016 | 2.26 | 3.69 | 9570 | 5975 | 70.9 | 77.0 |
| | 2'B | 130.0 | 936.0 | 880 | 996 | 2.26 | 3.69 | 9373 | 5857 | 70.9 | 75.4 |
| | 2'C | 130.0 | 936.0 | 880 | - | 2.26 | 3.69 | - | - | - | - |

[Table 2]

| | Module | Partition member specifications | | |
| --- | --- | --- | --- | --- |
| | | Cross-sectional area occupied by single filaments Smb | Cross-sectional area of potting agent dense section Sb | Potting agent dense section percentage Rb |
| | | [cm$^2$] | [cm$^2$] | [%] |
| Example 1 | 1A | 63.6 | 0.0 | 0.0 |
| | 1B | 63.6 | 0.0 | 0.0 |
| | 1C | 63.6 | 0.0 | 0.0 |
| Example 2 | 2A | 70.5 | 0.0 | 0.0 |
| | 2B | 70.5 | 0.0 | 0.0 |
| | 2C | 70.5 | 0.0 | 0.0 |
| Example 3 | 3A | 71.1 | 3.0 | 4.2 |
| | 3B | 71.1 | 3.0 | 4.2 |
| | 3C | 71.1 | 3.0 | 4.2 |
| Example 4 | 4A | 78.5 | 25.7 | 32.7 |
| | 4B | 78.5 | 25.7 | 32.7 |
| | 4C | 78.5 | 25.7 | 32.7 |
| Example 5 | 5A | 84.4 | 10.6 | 12.6 |
| | 5B | 84.4 | 10.6 | 12.6 |
| | 5C | 84.4 | 10.6 | 12.6 |
| Example 6 | 6A | 81.8 | 0.0 | 0.0 |
| | 6B | 81.8 | 0.0 | 0.0 |
| | 6C | 81.8 | 0.0 | 0.0 |
| Example 7 | 7A | 80.1 | 11.3 | 14.1 |
| | 7B | 80.1 | 11.3 | 14.1 |
| | 7C | 80.1 | 11.3 | 14.1 |
| Example 8 | 8A | 82.8 | 11.9 | 14.3 |
| | 8B | 82.8 | 11.9 | 14.3 |
| | 8C | 82.8 | 11.9 | 14.3 |
| Example 9 | 9A | 82.8 | 7.4 | 8.9 |
| | 9B | 82.8 | 7.4 | 8.9 |
| | 9C | 82.8 | 7.4 | 8.9 |
| Example 10 | 10A | 81.1 | 17.4 | 21.5 |
| | 10B | 81.1 | 17.4 | 21.5 |
| | 10C | 81.1 | 17.4 | 21.5 |
| Example 11 | 11A | 81.6 | 32.0 | 39.2 |
| | 11B | 81.6 | 32.0 | 39.2 |
| | 11C | 81.6 | 32.0 | 39.2 |

(continued)

| | Module | Partition member specifications | | |
|---|---|---|---|---|
| | | Cross-sectional area occupied by single filaments Smb | Cross-sectional area of potting agent dense section Sb | Potting agent dense section percentage Rb |
| | | [cm$^2$] | [cm$^2$] | [%] |
| Comp. Ex. 1 | 1'A | 77.4 | 0.0 | 0.0 |
| | 1'B | 77.4 | 0.0 | 0.0 |
| | 1'C | 77.4 | 0.0 | 0.0 |
| Comp. Ex. 2 | 2'A | 127.2 | 0.0 | 0.0 |
| | 2'B | 127.2 | 0.0 | 0.0 |
| | 2'C | 127.2 | 0.0 | 0.0 |

[Table 3]

| | Module | Adsorption performance | | | Buckling variation | | Potting layer defects |
|---|---|---|---|---|---|---|---|
| | | Kinetic adsorption capacity of single filament | Kinetic adsorption capacity of module | Scalability | Buckling rate W | Difference in buckling rate | Durability |
| | | [mg/mL] | [mg/mL] | [%] | [%] | [%] | [Times] |
| Example 1 | 1A | - | 43.3 | 97.7 | 108.4 | 3.2 | - |
| | 1B | 44.3 | - | - | 111.6 | | - |
| | 1C | - | - | - | - | - | 2 |
| Example 2 | 2A | - | 42.5 | 95.1 | 108.4 | 3.7 | - |
| | 2B | 44.7 | - | - | 112.1 | | - |
| | 2C | - | - | - | - | - | 1 |
| Example 3 | 3A | - | 45.3 | 97.6 | 103.7 | 0.5 | - |
| | 3B | 46.4 | - | - | 104.2 | | - |
| | 3C | - | - | - | - | - | 3 |
| Example 4 | 4A | - | 43.1 | 98.7 | 100 | 0 | - |
| | 4B | 43.7 | - | - | 100 | | - |
| | 4C | - | - | - | - | - | 1 |
| Example 5 | 5A | - | 42.5 | 94.4 | 100 | 0 | - |
| | 5B | 45 | - | - | 100 | | - |
| | 5C | - | - | - | - | - | 1 |
| Example 6 | 6A | - | 44.8 | 94.8 | 107.9 | 3.2 | - |
| | 6B | 47.3 | - | - | 111.1 | | - |
| | 6C | - | - | - | - | - | >10 |

(continued)

| | Module | Adsorption performance | | | Buckling variation | | Potting layer defects |
|---|---|---|---|---|---|---|---|
| | | Kinetic adsorption capacity of single filament | Kinetic adsorption capacity of module | Scalability | Buckling rate W | Difference in buckling rate | Durability |
| | | [mg/mL] | [mg/mL] | [%] | [%] | [%] | [Times] |
| Example 7 | 7A | - | 45.1 | 99.1 | 101.6 | 0.3 | - |
| | 7B | 45.5 | - | - | 101.8 | | - |
| | 7C | - | - | - | - | - | >10 |
| Example 8 | 8A | - | 43.6 | 99.4 | 100 | 0 | - |
| | 8B | 43.9 | - | - | 100 | | - |
| | 8C | - | - | - | - | - | >10 |
| Example 9 | 9A | - | 44.3 | 99.8 | 100 | 0 | - |
| | 9B | 44.4 | - | - | 100 | | - |
| | 9C | - | - | - | - | - | >10 |
| Example 10 | 10A | - | 45.9 | 99.8 | 100 | 0 | - |
| | 10B | 46 | - | - | 100 | | - |
| | 10C | - | - | - | - | - | >10 |
| Example 11 | 11A | - | 44.9 | 99.5 | 100 | 0 | - |
| | 11B | 45.1 | - | - | 100 | | - |
| | 11C | - | - | - | - | - | >10 |
| Comp. Ex. 1 | 1'A | - | 37.8 | 87.6 | 107.4 | 2.6 | - |
| | 1'B | 43.2 | - | - | 110 | | - |
| | 1'C | - | - | - | - | - | 2 |
| Comp. Ex. 2 | 2'A | - | 40.1 | 87.5 | 108.5 | 2.1 | - |
| | 2'B | 45.8 | - | - | 106.4 | | - |
| | 2'C | - | - | - | - | - | 1 |

[Example 1]

There were prepared three hollow fiber membrane modules as illustrated in Fig. 11(a) (1A, 1B, 1C). No partition member was used for Example 1.

Evaluation of the module adsorption capacity of module 1A revealed that 27.4 g of BSA was adsorbed per module. Subsequent disassembled examination indicated that the number of hollow fiber membranes n filled into the module 1A was 460, the hollow fiber membrane mean inner diameter Di/mean outer diameter Do ratio was 2.26 mm/ 3.69 mm, and the hollow fiber membrane average effective length L' was 206 mm. The distance between potting layer boundaries L was 190.0 mm and the housing inner diameter Dh was 104.7 mm. This resulted in a volume fill factor Rv of 61.9%, a buckling rate W of 108.4% and a membrane volume (toroidal) Vmm of 633 mL. From this, the module adsorption capacity was calculated to be 43.3 mg/mL. The potting agent dense section percentage Rb was 0%.

Upon disassembled examination of module 1B, the number of hollow fiber membranes n filled into the module 1B was 460, the hollow fiber membrane mean inner diameter Di/mean outer diameter Do ratio was 2.26 mm/3.69 mm, and the hollow fiber membrane average effective length L' was 212 mm. The distance between potting layer boundaries L was 190.0 mm and the housing inner diameter Dh was 104.7 mm. This resulted in a volume fill factor Rv of 63.8%, a buckling rate W of 111.6% and a membrane volume (toroidal) Vmm of 652 mL. The kinetic adsorption capacity of the single filaments of the removed hollow fiber membrane was 44.3 mg/mL, and the scalability was 97.7%.

The difference in buckling rates between modules 1A and 1B was 3.2%. The durability of module 1C was two times of use.

These evaluation results suggested that it is possible to produce a hollow fiber membrane module with suitable scalability in Example 1.

[Example 2]

There were prepared three hollow fiber membrane modules as illustrated in Fig. 11(a) (2A, 2B, 2C). No partition member was used for Example 2.

Evaluation of the module adsorption capacity of module 2A revealed that 29.8 g of BSA was adsorbed per module. Subsequent disassembled examination indicated that the number of hollow fiber membranes n filled into the module 2A was 510, the hollow fiber membrane mean inner diameter Di/mean outer diameter Do ratio was 2.26 mm/ 3.69 mm, and the hollow fiber membrane average effective length L' was 206 mm. The distance between potting layer boundaries L was 190.0 mm and the housing inner diameter Dh was 104.7 mm. This resulted in a volume fill factor Rv of 68.7%, a buckling rate W of 108.4% and a membrane volume (toroidal) Vmm of 702 mL. From this, the module adsorption capacity was calculated to be 42.5 mg/mL. The potting agent dense section percentage Rb was 0%.

Upon disassembled examination of module 2B, the number of hollow fiber membranes n filled into the module 2B was 510, the hollow fiber membrane mean inner diameter Di/mean outer diameter Do ratio was 2.26 mm/3.69 mm, and the hollow fiber membrane average effective length L' was 213 mm. The distance between potting layer boundaries L was 190.0 mm and the housing inner diameter Dh was 104.7 mm. This resulted in a volume fill factor Rv of 71.0%, a buckling rate W of 112.1% and a membrane volume (toroidal) Vmm of 726 mL. The kinetic adsorption capacity of the removed hollow fiber membrane was 44.7 mg/mL, and the scalability was 95.1%.

The difference in buckling rates between modules 2A and 2B was 3.7%. The durability of module 2C was one time of use.

These evaluation results suggested that it is possible to produce a hollow fiber membrane module with suitable scalability in Example 2.

[Example 3]

In the bundling step outlined in Fig. 4, three hollow fiber membrane modules (3A, 3B, 3C) were formed by inserting six straw-shaped potting agent-injecting members with outer diameters of 10 mm and inner diameters of 8 mm between a single hollow fiber membrane bundle. No partition member was used for Example 3.

Evaluation of the module adsorption capacity of module 3A revealed that 28.6 g of BSA was adsorbed per module. Subsequent disassembled examination indicated that the number of hollow fiber membranes n filled into the module 3A was 480, the hollow fiber membrane mean inner diameter Di/mean outer diameter Do ratio was 2.26 mm/ 3.69 mm, and the hollow fiber membrane average effective length L' was 197 mm. The distance between potting layer boundaries L was 190.0 mm and the housing inner diameter Dh was 104.7 mm. This resulted in a volume fill factor Rv of 61.8%, a buckling rate W of 103.7% and a membrane volume (toroidal) Vmm of 632 mL. From this, the module adsorption capacity was calculated to be 45.3 mg/mL. The potting agent dense section percentage Rb was 4.2%.

Upon disassembled examination of module 3B, the number of hollow fiber membranes n filled into the module 3B was 480, the hollow fiber membrane mean inner diameter Di/mean outer diameter Do ratio was 2.26 mm/3.69 mm, and the hollow fiber membrane average effective length L' was 198 mm. The distance between potting layer boundaries L was 190.0 mm and the housing inner diameter Dh was 104.7 mm. This resulted in a volume fill factor Rv of 62.1%, a buckling rate W of 104.2% and a membrane volume (toroidal) Vmm of 635 mL. The kinetic adsorption capacity of the removed hollow fiber membrane was 46.4 mg/mL, and the scalability was 97.6%.

The difference in buckling rates between modules 3A and 3B was 0.5%. The durability of module 3C was three times of use.

These evaluation results suggested that it is possible to produce a hollow fiber membrane module with suitable scalability in Example 3. Also, they suggested that there is an effect of preventing deviation from the assumed volume fill factor, by using a potting agent-injecting member to form a potting agent dense section extending across the entire thickness of the potting layer, along the lengthwise direction of the hollow fiber membrane, and minimizing buckling and reducing variation in buckling.

[Example 4]

In the bundling step outlined in Fig. 4, three hollow fiber membrane modules (4A, 4B, 4C) as shown in Fig. 11(b) were formed by inserting straw-shaped potting agent-injecting members with outer diameters of 10 mm and inner diameters of 8 mm between a hollow fiber membrane bundle split into seven small bundles. No partition member was used for Example 4.

Evaluation of the module adsorption capacity of module 4A revealed that 26.3 g of BSA was adsorbed per module. Subsequent disassembled examination indicated that the number of hollow fiber membranes n filled into the module 4A was 480, the hollow fiber membrane mean inner diameter Di/mean outer diameter Do ratio was 2.26 mm/3.69 mm, and the hollow fiber membrane average effective length L' was 190 mm. The distance between potting layer boundaries L was 190.0 mm and the housing inner diameter Dh was 104.7 mm. This resulted in a volume fill factor Rv of 59.6%, a buckling rate W of 100% and a membrane volume (toroidal) Vmm of 609 mL. From this, the module adsorption capacity was calculated to be 43.1 mg/mL. The potting agent dense section percentage Rb was 32.7%.

Upon disassembled examination of module 4B, the number of hollow fiber membranes n filled into the module 4B was 480, the hollow fiber membrane mean inner diameter Di/mean outer diameter Do ratio was 2.26 mm/3.69 mm, and the hollow fiber membrane average effective length L' was 190 mm. The distance between potting layer boundaries L was 190.0 mm and the housing inner diameter Dh was 104.7 mm. This resulted in a volume fill factor Rv of 59.6%, a buckling rate W of 100% and a membrane volume (toroidal) Vmm of 609 mL. The kinetic adsorption capacity of the removed hollow fiber membrane was 43.7 mg/mL, and the scalability was 98.7%.

The difference in buckling rates between modules 4A and 4B was 0.0%. The durability of module 4C was one time of use.

These evaluation results suggested that it is possible to produce a hollow fiber membrane module with suitable scalability in Example 4. Also, they suggested that there is an effect of preventing deviation from the assumed volume fill factor, by opening spaces between the small bundles to form potting agent dense sections extending across the entire thickness of the potting layer, along the lengthwise direction of the hollow fiber membrane, and minimizing buckling and reducing variation in buckling.

[Example 5]

In the bundling step outlined in Fig. 4, three hollow fiber membrane modules (5A, 5B, 5C) as shown in Fig. 15 (b) were formed by inserting a block-like spacer 77 with a cross-section of 6 mm × 6 mm between the small-bundled hollow fiber membrane bundles 3, instead of a partition member. No partition member was used for Example 5.

Evaluation of the module adsorption capacity of module 5A revealed that 29.1 g of BSA was adsorbed per module. Subsequent disassembled examination indicated that the number of hollow fiber membranes n filled into the module 5A was 540, the hollow fiber membrane mean inner diameter Di/mean outer diameter Do ratio was 2.26 mm/3.69 mm, and the hollow fiber membrane average effective length L' was 190 mm. The distance between potting layer boundaries L was 190.0 mm and the housing inner diameter Dh was 104.7 mm. This resulted in a volume fill factor Rv of 67.1%, a buckling rate W of 100% and a membrane volume (toroidal) Vmm of 686 mL. From this, the module adsorption capacity was calculated to be 42.5 mg/mL. The potting agent dense section percentage Rb was 12.6%.

Upon disassembled examination of module 5B, the number of hollow fiber membranes n filled into the module 5B was 540, the hollow fiber membrane mean inner diameter Di/mean outer diameter Do ratio was 2.26 mm/3.69 mm, and the hollow fiber membrane average effective length L' was 190 mm. The distance between potting layer boundaries L was 190.0 mm and the housing inner diameter Dh was 104.7 mm. This resulted in a volume fill factor Rv of 67.1%, a buckling rate W of 100% and a membrane volume (toroidal) Vmm of 686 mL. The kinetic adsorption capacity of the removed hollow fiber membrane was 45.0 mg/mL, and the scalability was 94.4%.

The difference in buckling rates between modules 5A and 5B was 0.0%. The durability of module 5C was one time of use.

These evaluation results suggested that it is possible to produce a hollow fiber membrane module with suitable scalability in Example 5. Also, they suggested that there is an effect of preventing deviation from the assumed volume fill factor, by forming bundles to form potting agent dense sections extending across the entire thickness of the potting layer, along the lengthwise direction of the hollow fiber membrane, and minimizing buckling and reducing variation in buckling.

[Example 6]

In the bundling step outlined in Fig. 4, three hollow fiber membrane modules (6A, 6B, 6C) as shown in Fig. 15 (a) were formed by splitting the hollow fiber membrane bundle into four small bundles and partitioning each of the small bundles with a partition member. The partition members used had a plate thickness of 4 mm and a width of 102 mm.

Evaluation of the module adsorption capacity of module 6A revealed that 31.5 g of BSA was adsorbed per module. Subsequent disassembled examination indicated that the number of hollow fiber membranes n filled into the module 6A was 512, the hollow fiber membrane mean inner diameter Di/mean outer diameter Do ratio was 2.26 mm/3.69 mm, and the hollow fiber membrane average effective length L' was 205 mm. The distance between potting layer boundaries L was 190.0 mm and the housing inner diameter Dh was 104.7 mm. This resulted in a volume fill factor Rv of 68.6%, a buckling rate W of 107.9% and a membrane volume (toroidal) Vmm of 701 mL. From this, the module adsorption capacity was calculated to be 44.8 mg/mL. The potting agent dense section percentage Rb was 0.0%.

Upon disassembled examination of module 6B, the number of hollow fiber membranes n filled into the module 6B was 512, the hollow fiber membrane mean inner diameter Di/mean outer diameter Do ratio was 2.26 mm/3.69 mm, and the hollow fiber membrane average effective length L' was 211 mm. The distance between potting layer boundaries L was 190.0 mm and the housing inner diameter Dh was 104.7 mm. This resulted in a volume fill factor Rv of 70.6%, a buckling rate W of 111.1% and a membrane volume (toroidal) Vmm of 722 mL. The kinetic adsorption capacity of the removed hollow fiber membrane was 47.3 mg/mL, and the scalability was 94.8%.

The difference in buckling rates between modules 6A and 6B was 3.2%. The durability of module 6C was more than ten times of use.

These evaluation results suggested that it is possible to produce a hollow fiber membrane module with suitable scalability in Example 6. They also demonstrated that repeat use durability is improved without cracking occurring in the potting layer.

[Example 7]

In the bundling step outlined in Fig. 4, three hollow fiber membrane modules (7A, 7B, 7C) as shown in Fig. 13 (a) were formed by splitting the hollow fiber membrane bundle into four small bundles and partitioning each of the small bundles with a plurality of cylindrical members connected in a cross shape. Each cylindrical member composing the cross shape had an outer diameter of 14.5 mm and an inner diameter of 12 mm, and 10 were used.

Evaluation of the module adsorption capacity of module 7A revealed that 26.8 g of BSA was adsorbed per module. Subsequent disassembled examination indicated that the number of hollow fiber membranes n filled into the module 7A was 460, the hollow fiber membrane mean inner diameter Di/mean outer diameter Do ratio was 2.26 mm/3.69 mm, and the hollow fiber membrane average effective length L' was 193 mm. The distance between potting layer boundaries L was 190.0 mm and the housing inner diameter Dh was 104.7 mm. This resulted in a volume fill factor Rv of 58.0%, a buckling rate W of 101.6% and a membrane volume (toroidal) Vmm of 593 mL. From this, the module adsorption capacity was calculated to be 45.1 mg/mL. The potting agent dense section percentage Rb was 14.1%.

Upon disassembled examination of module 7B, the number of hollow fiber membranes n filled into the module 7B was 460, the hollow fiber membrane mean inner diameter Di/mean outer diameter Do ratio was 2.26 mm/3.69 mm, and the hollow fiber membrane average effective length L' was 193.5 mm. The distance between potting layer boundaries L was 190.0 mm and the housing inner diameter Dh was 104.7 mm. This resulted in a volume fill factor Rv of 58.2%, a buckling rate W of 101.8% and a membrane volume (toroidal) Vmm of 595 mL. The kinetic adsorption capacity of the removed hollow fiber membrane was 45.5 mg/mL, and the scalability was 99.1%.

The difference in buckling rates between modules 7A and 7B was 0.3%. The durability of module 7C was more than ten times of use.

These evaluation results suggested that it is possible to produce a hollow fiber membrane module with suitable scalability in Example 7. Also, they suggested that there is an effect of preventing deviation from the assumed volume fill factor, by forming bundles to form potting agent dense sections extending across the entire thickness of the potting layer, along the lengthwise direction of the hollow fiber membrane, and minimizing buckling and reducing variation in buckling.

[Example 8]

In the bundling step outlined in Fig. 4, three hollow fiber membrane modules (8A, 8B, 8C) as shown in Fig. 14 (a) were formed by splitting the hollow fiber membrane bundle into eight small bundles and partitioning each of the small bundles with a partition member having a pair of mutually opposing plate members in a horizontal group of three and a vertical group of one. The partition members used had a plate thickness of 4 mm for each plate member, and a clearance of 4 mm between the pair of plate members.

Evaluation of the module adsorption capacity of module 8A revealed that 18.8 g of BSA was adsorbed per module. Subsequent disassembled examination indicated that the number of hollow fiber membranes n filled into the module 8A was 340, the hollow fiber membrane mean inner diameter Di/mean outer diameter Do ratio was 2.26 mm/3.69 mm, and the hollow fiber membrane average effective length L' was 190 mm. The distance between potting layer boundaries L was 190.0 mm and the housing inner diameter Dh was 104.7 mm. This resulted in a volume fill factor Rv of 42.2%, a buckling rate W of 100.0% and a membrane volume (toroidal) Vmm of 432 mL. From this, the module adsorption capacity was calculated to be 43.6 mg/mL. The potting agent dense section percentage Rb was 14.3%.

Upon disassembled examination of module 8B, the number of hollow fiber membranes n filled into the module 8B was 340, the hollow fiber membrane mean inner diameter Di/mean outer diameter Do ratio was 2.26 mm/3.69 mm, and the hollow fiber membrane average effective length L' was 190 mm. The distance between potting layer boundaries L was 190.0 mm and the housing inner diameter Dh was 104.7 mm. This resulted in a volume fill factor Rv of 42.2%, a buckling rate W of 100.0% and a membrane volume (toroidal) Vmm of 432 mL. The kinetic adsorption capacity of the removed hollow fiber membrane was 43.9 mg/mL, and the scalability was 99.4%.

The difference in buckling rates between modules 8A and 8B was 0.0%. The durability of module 8C was more than ten times of use.

These evaluation results suggested that it is possible to produce a hollow fiber membrane module with suitable scalability in Example 8. They also demonstrated that repeat use durability is improved without cracking occurring in the potting layer. Also, they suggested that there is an effect of preventing deviation from the assumed volume fill factor, by forming bundles to form potting agent dense sections extending across the entire thickness of the potting layer, along the lengthwise direction of the hollow fiber membrane, and minimizing buckling and reducing variation in buckling.

[Example 9]

In the bundling step outlined in Fig. 4, three hollow fiber membrane modules (9A, 9B, 9C) as shown in Fig. 2 were formed by splitting the hollow fiber membrane bundle into four small bundles and partitioning each of the small bundles with a partition member having a pair of mutually opposing plate members disposed in a cross shape. The partition members used had a plate thickness of 4 mm for each plate member, and a clearance of 4 mm between the pair of plate members.

Evaluation of the module adsorption capacity of module 9A revealed that 25.9 g of BSA was adsorbed per module. Subsequent disassembled examination indicated that the number of hollow fiber membranes n filled into the module 9A was 460, the hollow fiber membrane mean inner diameter Di/mean outer diameter Do ratio was 2.26 mm/3.69 mm, and the hollow fiber membrane average effective length L' was 190 mm. The distance between potting layer boundaries L was 190.0 mm and the housing inner diameter Dh was 104.7 mm. This resulted in a volume fill factor Rv of 57.1%, a buckling rate W of 100.0% and a membrane volume (toroidal) Vmm of 584 mL. From this, the module adsorption capacity was calculated to be 44.3 mg/mL. The potting agent dense section percentage Rb was 8.9%.

Upon disassembled examination of module 9B, the number of hollow fiber membranes n filled into the module 9B was 460, the hollow fiber membrane mean inner diameter Di/mean outer diameter Do ratio was 2.26 mm/3.69 mm, and the hollow fiber membrane average effective length L' was 190 mm. The distance between potting layer boundaries L was 190.0 mm and the housing inner  diameter Dh was 104.7 mm. This resulted in a volume fill factor Rv of 57.1%, a buckling rate W of 100.0% and a membrane volume (toroidal) Vmm of 584 mL. The kinetic adsorption capacity of the removed hollow fiber membrane was 44.4 mg/mL, and the scalability was 99.8%.

The difference in buckling rates between modules 9A and 9B was 0.0%. The durability of module 9C was more than ten times of use.

These evaluation results suggested that it is possible to produce a hollow fiber membrane module with suitable scalability in Example 9. They also demonstrated that repeat use durability is improved without cracking occurring in the potting layer. Also, they suggested that there is an effect of preventing deviation from the assumed volume fill factor, by forming bundles to form potting agent dense sections extending across the entire thickness of the potting layer, along the lengthwise direction of the hollow fiber membrane, and minimizing buckling and reducing variation in buckling.

[Example 10]

In the bundling step outlined in Fig. 4, three hollow fiber membrane modules (10A, 10B, 10C) as shown in Fig. 14(b) were formed by splitting the hollow fiber membrane bundle into eight small bundles and partitioning the small bundles into two bundles each using a partition member having a pair of mutually opposing plate members disposed in a cross shape, and partitioning the two small bundles partitioned with the partition member, using a splitting net. The partition members used had a plate thickness of 4 mm for each plate member, and a clearance of 4 mm between the pair of plate members. The splitting net used was a thin net with mesh openings.

Evaluation of the module adsorption capacity of module 10A revealed that 26.8 g of BSA was adsorbed per module. Subsequent disassembled examination indicated that the number of hollow fiber membranes n filled into the module 10A was 460, the hollow fiber membrane mean inner diameter Di/mean outer diameter Do ratio was 2.26 mm/3.69 mm, and the hollow fiber membrane average effective length L' was 190 mm. The distance between potting layer boundaries L was 190.0 mm and the housing inner diameter Dh was 104.7 mm. This resulted in a volume fill factor Rv of 57.1%, a buckling rate W of 100.0% and a membrane volume (toroidal) Vmm of 587 mL. From this, the module adsorption capacity was calculated to be 45.9 mg/mL. The potting agent dense section percentage Rb was 21.5%.

Upon disassembled examination of module 10B, the number of hollow fiber membranes n filled into the module 10B was 460, the hollow fiber membrane mean inner diameter Di/mean outer diameter Do ratio was 2.26 mm/3.69 mm, and the hollow fiber membrane average effective length L' was 190 mm. The distance between potting layer boundaries L was 190.0 mm and the housing inner diameter Dh was 104.7 mm. This resulted in a volume fill factor Rv of 57.1%, a buckling rate W of 100.0% and a membrane volume (toroidal) Vmm of 584 mL. The kinetic adsorption capacity of the removed hollow fiber membrane was 46.0 mg/mL, and the scalability was 99.8%.

The difference in buckling rates between modules 10A and 10B was 0.0%. The durability of module 10C was more than ten times of use.

These evaluation results suggested that it is possible to produce a hollow fiber membrane module with suitable scalability in Example 10. They also demonstrated that repeat use durability is improved without cracking occurring in the potting layer. Also, they suggested that there is an effect of preventing deviation from the assumed volume fill factor, by forming bundles to form potting agent dense sections extending across the entire thickness of the potting layer, along the lengthwise direction of the hollow fiber membrane, and minimizing buckling and reducing variation in buckling.

[Example 11]

In the bundling step outlined in Fig. 4, three hollow fiber membrane modules (11A, 11 B, 11 C) as shown in Fig. 2 and Fig. 3 were formed by splitting the hollow fiber membrane bundle into four small bundles, covering the outer peripheries of the split small bundles with respective protecting members, and partitioning each of the small bundles covered with the protecting member using a partition member having a pair of mutually opposing plate members disposed in a cross shape. The partition members used had a plate thickness of 4 mm for each plate member, and a clearance of 4 mm between the pair of plate members. The splitting net used was a thin net with mesh openings.

Evaluation of the module adsorption capacity of module 11A revealed that 18.9 g of BSA was adsorbed per module. Subsequent disassembled examination indicated that the number of hollow fiber membranes n filled into the module 11A was 332, the hollow fiber membrane mean inner diameter Di/mean outer diameter Do ratio was 2.26 mm/ 3.69 mm, and the hollow fiber membrane average effective length L' was 190 mm. The distance between potting layer boundaries L was 190.0 mm and the housing inner diameter Dh was 104.7 mm. This resulted in a volume fill factor Rv of 41.2%, a buckling rate W of 100.0% and a membrane volume (toroidal) Vmm of 422 mL. From this, the module adsorption capacity was calculated to be 44.9 mg/mL. The potting agent dense section percentage Rb was 39.2%.

Upon disassembled examination of module 11B, the number of hollow fiber membranes n filled into the module 11B was 332, the hollow fiber membrane mean inner diameter Di/mean outer diameter Do ratio was 2.26 mm/3.69 mm, and the hollow fiber membrane average effective length L' was 190 mm. The distance between potting layer boundaries L was 190.0 mm and the housing inner diameter Dh was 104.7 mm. This resulted in a volume fill factor Rv of 41.2%, a buckling rate W of 100.0% and a membrane volume (toroidal) Vmm of 422 mL. The kinetic adsorption capacity of the removed hollow fiber membrane was 45.1 mg/mL, and the scalability was 99.5%.

The difference in buckling rates between modules 11A and 11B was 0.0%. The durability of module 11C was more than ten times of use.

These evaluation results suggested that it is possible to produce a hollow fiber membrane module with suitable scalability in Example 11. They also demonstrated that repeat use durability is improved without cracking occurring in the potting layer. Also, they suggested that there is an effect of preventing deviation from the assumed volume fill factor, by forming bundles to form potting agent dense sections extending across the entire thickness of the potting layer, along the lengthwise direction of the hollow fiber membrane, and minimizing buckling and reducing variation in buckling.

[Comparative Example 1]

In the bundling step outlined in Fig. 4, three hollow fiber membrane modules (1'A, 1'B, 1'C) as shown in Fig. 11(a) were formed by bundling only the hollow fiber membranes into a single bundle. No partition member was used for Comparative Example 1.

Evaluation of the module adsorption capacity of module 1'A revealed that 28.9 g of BSA was adsorbed per module. Subsequent disassembled examination indicated that the number of hollow fiber membranes n filled into the module 1'A was 560, the hollow fiber membrane mean inner diameter Di/mean outer diameter Do ratio was 2.26 mm/ 3.69 mm, and the hollow fiber membrane average effective length L' was 204 mm. The distance between potting layer boundaries L was 190.0 mm and the housing inner diameter Dh was 104.7 mm. This resulted in a volume fill factor Rv of 74.7%, a buckling rate W of 107.4% and a membrane volume (toroidal) Vmm of 763 mL. From this, the module adsorption capacity was calculated to be 37.8 mg/mL. The potting agent dense section percentage Rb was 0.0%.

Upon disassembled examination of module 1'B, the number of hollow fiber membranes n filled into the module 1'B was 560, the hollow fiber membrane mean inner diameter Di/mean outer diameter Do ratio was 2.26 mm/3.69 mm, and the hollow fiber membrane average effective length L' was 209 mm. The distance between potting layer boundaries L was 190.0 mm and the housing inner diameter Dh was 104.7 mm. This resulted in a volume fill factor Rv of 76.5%, a buckling rate W of 110.0% and a membrane volume (toroidal) Vmm of 782 mL. The kinetic adsorption capacity of the removed hollow fiber membrane was 43.2 mg/mL, and the scalability was 87.6%.

The difference in buckling rates between modules 1'A and 1'B was 2.6%. The durability of module 1'C was two times of use.

Based on these results, the performance ratio of the module adsorption capacity with respect to the single filament adsorption capacity was low at 87.6% in Comparative Example 1, thus confirming that it is difficult to maintain the performance of single filaments when in the form of a hollow fiber membrane module.

[Comparative Example 2]

In the bundling step outlined in Fig. 4, three hollow fiber membrane modules (2'A, 2'B, 2'C) as shown in Fig. 11(a) were formed by bundling only the hollow fiber membranes into a single bundle. No partition member was used for Comparative Example 2.

Evaluation of the module adsorption capacity of module 2'A revealed that 239.4 g of BSA was adsorbed per module. Subsequent disassembled examination indicated that the number of hollow fiber membranes n filled into the module 2'A was 880, the hollow fiber membrane mean inner diameter Di/mean outer diameter Do ratio was 2.26 mm/ 3.69 mm, and the hollow fiber membrane average effective length L' was 1016 mm. The distance between potting layer boundaries L was 936.0 mm and the housing inner diameter Dh was 130.0 mm. This resulted in a volume fill factor Rv of 77.0%, a buckling rate W of 108.5% and a membrane volume (toroidal) Vmm of 5975 mL. From this, the module adsorption capacity was calculated to be 40.1 mg/mL. The potting agent dense section percentage Rb was 0.0%.

Upon disassembled examination of module 2'B, the number of hollow fiber membranes n filled into the module 2'B was 880, the hollow fiber membrane mean inner diameter Di/mean outer diameter Do ratio was 2.26 mm/3.69 mm, and the hollow fiber membrane average effective length L' was 996 mm. The distance between potting layer boundaries L was 936.0 mm and the housing inner diameter Dh was 130.0 mm. This resulted in a volume fill factor Rv of 75.4%, a buckling rate W of 106.4% and a membrane volume (toroidal) Vmm of 5857 mL. The kinetic adsorption capacity of the removed hollow fiber membrane was 45.8 mg/mL, and the scalability was 87.6%.

The difference in buckling rates between modules 2'A and 2'B was 2.1%. The durability of module 1'C was one time of use.

Based on these evaluation results, the performance ratio of the module adsorption capacity with respect to the single filament adsorption capacity was low at 87.6% in Comparative Example 2, thus confirming that it is difficult to maintain the performance of single filaments when in the form of a hollow fiber membrane module.

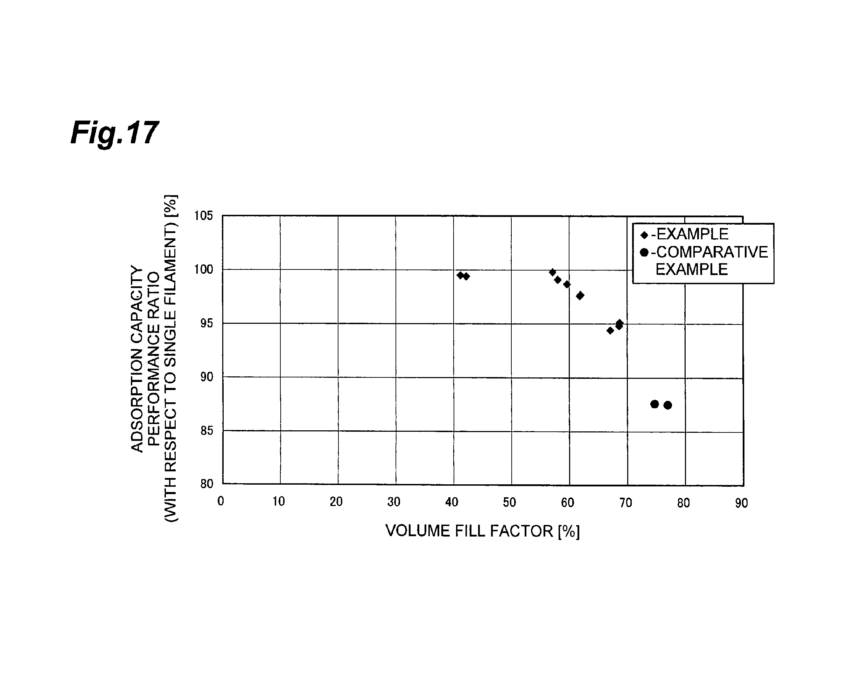

Fig. 17 shows the relationship between volume fill factor and adsorption capacity performance ratio for Examples 1 to 11 and Comparative Examples 1 and 2. As shown in Fig. 17, the module adsorption capacity with respect to the single filament adsorption capacity was a low value of less than 90% in Comparative Examples 1 and 2 in which the volume fill factor was at least 70%, making it difficult to ensure scalability, whereas in Examples 1 to 11 where the volume fill factor was in the range of at least 30% and less than 70%, the module adsorption capacity with respect to the single filament adsorption capacity was a high value of 90% or greater, demonstrating that it is possible to ensure high scalability.

Comparative Example 2 was a model of a hollow fiber membrane module as described in Japanese Unexamined Patent Application Publication No. 2011-016116 or Japanese Unexamined Patent Application Publication No. 2011-016119. Upon actual experimentation in Comparative Example 2, filling with the potting agent resulted in significant buckling of the hollow fiber membranes, and the volume fill factor increased to 77.0%. As a result, the adsorption capacity per unit membrane volume was lower and the module adsorption capacity with respect to the single filament adsorption capacity was low at 87.5%.

In Examples 2, 1, 9 and 11, for example, the relationships between the volume fill factor and scalability for modules 2A, 1A, 9A and 11A were 95.1%, 97.7%, 99.8% and 99.5% as the performance ratios with respect to 68.7%, 61.9%, 57.1% and 41.2% as the volume fill factors, thus confirming that all were at least 90%.

In addition, comparing the potting agent dense section percentages and buckling rate differences in Examples 6, 3, 9, 5 and 4, for example, the potting agent dense section percentages were 0.0%, 4.2%, 8.9%, 12.6% and 32.7% and the buckling rate differences were 3.2%, 0.5%, 0.0%, 0.0% and 0.0%, thus confirming that with a potting agent dense section percentage of 3% or greater, it was possible to inhibit variation in the volume fill factor caused by buckling.

Also, Examples 1 to 5 are examples where no partition member was provided in the potting layer, while Examples 6 to 11 are examples where a partition member was provided in the potting layer. It was confirmed that providing a partition member improves the durability of the potting layer for repeated use.

Explanation of Symbols

1: Hollow fiber membrane module (adsorption/separation membrane module), 2: hollow fiber membrane, 2a, 2b: ends, 3: hollow fiber membrane bundle, 3A, 3B, 3C, 3D: small bundles, 3a, 3b: hollow fiber membrane bundle ends, 4: housing (cylinder), 4A: space, 4B: space, 4C: space, 6, 6A, 6B: partition members, 7, 7A, 7B: potting layers, 8:

protecting member, 11: housing body (cylinder), 11 a, 11b: trimmed sections, 12A, 12B: caps, 13A, 13B: fasteners, 14A, 14B: duct sections, 16A, 16B: duct sections, 21, 22, 23, 24, 26: penetrating sections, 31, 32, 33, 34: wall sections, 31a, 31b: plate members, 32: wall section, 32a, 32b: plate members, 33: wall section, 33a, 33b: plate members, 34: wall section, 34a, 34b: plate members, 41, 42: flat plates, 43, 44: flat plates, 50: unit, 51A, 51B: caps, 51a: duct section, 71: partition member, 72: partition member, 73: partition member, 74: partition member, 76: splitting net (splitting means), 77: spacer, 78: partition member, 81: potting agent-injecting member, BD: potting agent.

**Claims**

1. An adsorption/separation membrane module comprising:

   a hollow fiber membrane bundle composed of a plurality of hollow fiber membranes with an adsorption function,
   a cylinder that houses the hollow fiber membrane bundle, and
   a potting layer that pots at least one end of the hollow fiber membrane bundle to the cylinder,
   wherein the potting layer has a potting agent dense section extending across the entire thickness of the potting layer, along the lengthwise direction of the hollow fiber membrane bundle.

2. An adsorption/separation membrane module according to claim 1, wherein the cross-sectional area of the potting agent dense section is at least 3% and less than 60% with respect to the cross-sectional area occupied by the hollow fiber membrane bundle.

3. An adsorption/separation membrane module according to claim 1 or 2, wherein in the potting layer, the hollow fiber membrane bundle is split by a plurality of small bundles, with each of the small bundles disposed with space between them.

4. An adsorption/separation membrane module according to any one of claims 1 to 3, which further comprises a partition member partitioning the hollow fiber membrane bundle into a plurality of small bundles and having penetrating sections that penetrate in the lengthwise direction of the hollow fiber membrane bundle, in the potting layer.

5. An adsorption/separation membrane module according to claim 4, wherein the potting agent composing the potting layer is filled into the penetrating sections.

6. An adsorption/separation membrane module according to claim 4 or 5, wherein the partition member has the penetrating sections formed by a pair of plate members laid facing each other.

7. An adsorption/separation membrane module according to any one of claims 4 to 6, which further comprises splitting means that splits the hollow fiber membrane bundle that has been partitioned by the partition member.

8. An adsorption/separation membrane module according to any one of claims 4 to 7, which further comprises a protecting member covering the outer periphery of the hollow fiber membrane bundle that has been partitioned by the partition member.

9. An adsorption/separation membrane module according to any one of claims 4 to 8, wherein the partition member has a pair of mutually opposing plate members combined in a cross shape.

10. An adsorption/separation membrane module according to any one of claims 1 to 9, which is to be used for separation and purification for biological purposes.

11. A method for producing an adsorption/separation membrane module comprising a hollow fiber membrane bundle composed of a plurality of hollow fiber membranes with an adsorption function, a cylinder housing the hollow fiber membrane bundle, and a potting layer that pots at least the ends of the hollow fiber membrane bundle to the cylinder, wherein:

   the potting agent is filled into the ends of a unit comprising the hollow fiber membrane bundle, the cylinder and a potting agent-injecting member that forms gaps between the hollow fiber membranes and extends along the lengthwise direction of the hollow fiber membrane bundle, to pot the hollow fiber membrane bundle to the cylinder, and

the ends of the unit are cut to open the ends of the hollow fiber membrane.

12. A method for producing an adsorption/separation membrane module comprising a hollow fiber membrane bundle composed of a plurality of hollow fiber membranes with an adsorption function, a cylinder housing the hollow fiber membrane bundle, a potting layer that pots at least the ends of the hollow fiber membrane bundle to the cylinder, and a partition member that partitions the hollow fiber membrane bundle into a plurality of small bundles in the potting layer and has a penetrating section that penetrates in the lengthwise direction of the hollow fiber membrane, wherein:

   the potting agent is filled into the ends of a unit comprising the hollow fiber membrane bundle, the cylinder and the partition member, to pot the hollow fiber membrane bundle and partition member to the cylinder, and
   the ends of the unit are cut to open the ends of the hollow fiber membrane.

13. A partition member provided in an adsorption/separation membrane module comprising a hollow fiber membrane bundle composed of a plurality of hollow fiber membranes with an adsorption function, a cylinder that houses the hollow fiber membrane bundle, and a potting layer that pots at least one end of the hollow fiber membrane bundle to the cylinder, and partitions the hollow fiber membrane bundle into a plurality of membrane bundles at the ends of the hollow fiber membrane bundles,
   the partition member having a penetrating section that penetrates in the axial direction.

14. An adsorption/separation membrane module comprising:

   a hollow fiber membrane bundle composed of a plurality of hollow fiber membranes with an adsorption function,
   a cylinder that houses the hollow fiber membrane bundle, and
   a potting layer that pots at least one end of the hollow fiber membrane bundle to the cylinder,
   the ratio of the kinetic adsorption capacity of the adsorption/separation membrane module with respect to the kinetic adsorption capacity of the hollow fiber membranes being between 90% and 100%.

15. An adsorption/separation membrane module according to claim 14, wherein the volume fill factor, as the volume occupied by the hollow fiber membrane with respect to the volume of the cylinder, is at least 30% and less than 70%.

**Fig.1**

# Fig.2

# Fig.3

## Fig.4

```
        ┌──────────────┐
        │    START     │
        └──────┬───────┘
               │
        ┌──────┴───────┐
        │ BUNDLING STEP│────── S10
        └──────┬───────┘
               │
        ┌──────┴───────┐
        │ SEALING STEP │────── S20
        └──────┬───────┘
               │
        ┌──────┴───────┐
        │ UNIT ASSEMBLY│
        │     STEP     │────── S30
        └──────┬───────┘
               │
        ┌──────┴───────┐
        │ANCHORING AGENT│
        │ FILLING STEP │────── S40
        └──────┬───────┘
               │
        ┌──────┴───────┐
        │ CUTTING STEP │────── S50
        └──────┬───────┘
               │
        ┌──────┴───────┐
        │CAP ATTACHMENT│
        │     STEP     │────── S60
        └──────┬───────┘
               │
        ┌──────┴───────┐
        │     END      │
        └──────────────┘
```

# Fig.5

# Fig.6

# Fig.7

# Fig.8

## Fig.9

MODULE KINETIC ADSORPTION CAPACITY[mg/mL]

VOLUME FILL FACTOR [%]

*Fig.10*

(a)

(b)

*Fig.11*

(a)

(b)

*Fig.12*

(a)

81
2
3

(b)

7
81
2
3

(c)

7
81
2
3

*Fig.13*

## Fig.14

(a)

(b)

*Fig.15*

(a)

(b)

# Fig.16

```
        ┌─────────────────────────┐
        │   PARTITION MEMBER       │
        │  CONFIRMATION SCHEME     │
        └─────────────────────────┘
                    │
                    ▼                        S1
              ◇ HOLLOW ◇
            FIBER MEMBRANE BUNDLE ──── No ──┐
               PARTITIONED?                 │
                    │ Yes                    │
                    ▼                  S2     │
       Yes ◇ CAN                        ◇    │
      ┌──── PARTITION MEMBER                  │
      │     BE SEEN AT MODULE                 │
      │        EDGES?                         │
      │           │ No                        │
      │           ▼                    S3      │
      │    Yes ◇ CAN                    ◇     │
      ├──── PARTITION MEMBER                   │
      │     BE SEEN AT ANCHORING              │
      │     LAYER EMBEDDED                     │
      │        SECTION?                        │
      │           │ No                         │
      │           ▼                    S4       │
      │    ◇ ANCHORING                  ◇      │
      │     LAYER SLICE STRIPS                  │
 Yes ─┤  FRACTURE AT BOUNDARY ── No ──┐        │
      │  BETWEEN ANCHORING AGENT        │       │
      │     AND PARTITION               │       │
      │        MEMBER?                  │       │
      │                                 │       │
   S6 │                              S5 │       │
      ▼                                 ▼       ▼
┌──────────────┐              ┌──────────────────┐
│  PARTITION   │              │   NO PARTITION    │
│MEMBER PRESENT│              │  MEMBER PRESENT   │
└──────────────┘              └──────────────────┘
```

*Fig.17*

<table>
<tr><td colspan="2" align="center">**INTERNATIONAL SEARCH REPORT**</td><td>International application No.<br>PCT/JP2011/080343</td></tr>
</table>

**A. CLASSIFICATION OF SUBJECT MATTER**
*B01D63/02*(2006.01)i, *B01D63/00*(2006.01)i, *B01J20/28*(2006.01)i, *B01J20/30*
(2006.01)i

According to International Patent Classification (IPC) or to both national classification and IPC

**B. FIELDS SEARCHED**

Minimum documentation searched (classification system followed by classification symbols)
B01D63/02, B01D63/00, B01J20/28, B01J20/30

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2009-240900 A  (Toray Industries, Inc.),<br>22 October 2009 (22.10.2009),<br>paragraphs [0011] to [0025]; fig. 1 to 12<br>(Family: none) | 1,2,10,11 |
| X | JP 1-4205 A  (Fresenius AG.),<br>09 January 1989 (09.01.1989),<br>page 6, upper right column, line 17 to page 7,<br>upper left column, line 19; fig. 1 to 3<br>& US 4784768 A          & EP 283826 A2<br>& DE 3709432 A | 1-3,10 |

| ☒ | Further documents are listed in the continuation of Box C. | ☐ | See patent family annex. |
|---|---|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>27 March, 2012 (27.03.12) | Date of mailing of the international search report<br>10 April, 2012 (10.04.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2011/080343 |

C (Continuation).   DOCUMENTS CONSIDERED TO BE RELEVANT

| Category* | Citation of document, with indication, where appropriate, of the relevant passages | Relevant to claim No. |
|---|---|---|
| X | WO 2003/039720 A1  (Asahi Kasei Corp.),<br>15 May 2003 (15.05.2003),<br>page 5, line 13 to page 15, line 1; fig. 1 to 32<br>& US 2004/0178136 A1     & EP 1442782 A1<br>& CN 1482940 A | 4-9,12,13 |
| X | JP 2005-52362 A  (Toyobo Co., Ltd.),<br>03 March 2005 (03.03.2005),<br>claims; paragraph [0028]<br>(Family: none) | 14,15 |

Form PCT/ISA/210 (continuation of second sheet) (July 2009)

**EP 2 659 951 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002018244 A
- JP 2000185220 A
- WO 2009054226 A
- US 5547575 A
- US 6780327 B
- JP 2006519273 A
- JP 2009053191 A
- JP 2011016116 A
- JP 2011016119 A